# FASCICULE DE BREVET EUROPEEN

(11) **EP 4 255 726 B1**
(45) Date de publication et mention de la délivrance du brevet: **31.07.2024**
(21) Numéro de dépôt: 21824632.0
(22) Date de dépôt: 30.11.2021
(51) Int. Cl.: B32B 3/26, B32B 17/10, B60R 1/00

(54) **VITRAGE FEUILLETE DE VEHICULE ET DISPOSITIF AVEC SYSTEME DE VISION PROCHE INFRAROUGE ASSOCIE**
LAMINIERTE FAHRZEUGVERGLASUNG UND VORRICHTUNG MIT ZUGEHÖRIGEM NAHINFRAROTSICHTSYSTEM
LAMINATED VEHICLE GLAZING AND DEVICE COMPRISING AN ASSOCIATED NEAR-INFRARED VISION SYSTEM

(30) Priorité: 01.12.2020 FR 2012487
(43) Date de publication de la demande: 11.10.2023
(73) Titulaire: Saint-Gobain Glass France, 92400 Courbevoie (FR)
(72) Inventeur: YAVARI, Keihann, 60280 MARGNY-LES-COMPIEGNE (FR); KLEO, Christophe, 60350 ATTICHY (FR); GALLINELLI, Thomas, 71200 LE CREUSOT (FR)
(74) Mandataire: Saint-Gobain Recherche
(86) Numéro de dépôt international: PCT/FR2021/052139
(87) Numéro de publication internationale: WO 2022/117943

(56) Documents cités:
- WO-A1-2020/214431
- DE-U1- 202019 103 729
- DATABASE WPI Week 202006, Derwent World Patents Index; AN 2020-67943Q, XP002803784

## Description

L'invention se rapporte à un vitrage feuilleté, en particulier un pare-brise, dans un véhicule notamment routier, de train en association avec un système de vision dans le proche infrarouge. L'invention décrit également un dispositif combinant ledit vitrage et le système de vision.

Les vitrages pour véhicules autonomes et la technologie associée évoluent constamment, notamment pour améliorer la sécurité.

La télédétection par laser ou LIDAR, acronyme de l'expression en langue anglaise « light détection and ranging » ou « laser détection and ranging » (soit en français « détection et estimation de la distance par la lumière » ou « par laser ») est utilisable dans des véhicules autonomes au niveau des phares.

Plus récemment la demande de brevet WO20180153012 propose de placer un LIDAR fonctionnant dans le proche infrarouge entre 750nm et 1050nm derrière le pare-brise feuilleté comportant deux feuilles de verre extraclair et un filtre infrarouge.

CN 111 409 314 A décrit un autre pare-brise à utiliser avec un LIDAR, comportant un premier trou et un deuxième trou traversant dans l'épaisseur de la deuxième feuille de verre, le deuxième trou traversant étant disjoint du premier trou traversant, et à côté de ce dernier.

Les performances de ce dispositif de vision (vitrage associé au LIDAR) peuvent être améliorées.

Plus précisément, la présente invention se rapporte à un vitrage feuilleté (et/ou bombé) de véhicule notamment routier (voiture, camion, transport en commun: bus, car etc) ou ferroviaire (en particulier à vitesse maximale d'au plus 90km/h ou d'au plus 70km/h, en particulier les métros, tramway), notamment bombé, en particulier un pare-brise, ou encore une lunette arrière, voire un vitrage latéral, d'épaisseur E1 donnée par exemple subcentimétrique notamment d'au plus 5mm pour un pare-brise de véhicule routier, vitrage comportant :
- un première feuille de verre, notamment bombée, destinée à être le vitrage extérieur, avec une première face principale externe F1 et une deuxième face principale interne F2 orientée vers l'habitacle, si véhicule automobile d'épaisseur de préférence d'au plus 4mm, et même d'au plus 3mm ou 2,5mm, - notamment 2,1mm, 1,9mm, 1,8mm, 1,6mm et 1,4mm- et de préférence d'au moins 0,7mm ou 1mm
- un intercalaire de feuilletage (mono ou multifeuillet), éventuellement neutre, clair, extraclair ou teinté notamment gris ou vert, en matière polymère de préférence thermoplastique et mieux encore en polyvinylbutyral (PVB de préférence incluant des plastifiants), de préférence si véhicule routier d'épaisseur d'au plus 1,8mm, mieux d'au plus 1,2mm et même d'au plus 0,9mm (et mieux d'au moins 0,3mm et même d'au moins 0,6mm), l'intercalaire de feuilletage étant éventuellement acoustique et/ou ayant éventuellement une section transversale diminuant en forme en coin du haut vers le bas du vitrage feuilleté (en particulier un parebrise) pour un affichage tête haute (HUD pour Head Up Display en anglais), intercalaire de feuilletage avec une face principale Fa orienté vers F2 et avec une face principale Fb opposée à Fa
- une deuxième feuille de verre destinée à être le vitrage intérieur, de préférence bombée (comme la première feuille) et en particulier teintée, avec une troisième face principale F3 côté F2 et une quatrième face principale F4 interne orientée vers l'habitacle, si véhicule routier d'épaisseur de préférence inférieure à celle du premier vitrage, même d'au plus 3mm ou 2mm - notamment 1,9mm, 1,8mm, 1,6mm et 1,4mm- ou même d'au plus 1,3mm, et de préférence d'au moins 0,7mm, l'épaisseur des première et deuxième feuilles de verres étant de préférence strictement inférieure à 5 ou 4mm, même à 3,7mm.

La deuxième feuille de verre notamment à base de silice, sodocalcique, de préférence silicosodo calcique, voire aluminosilicate, ou borosilicate présente de préférence une teneur pondérale en oxyde de fer total (exprimé sous la forme Fe₂O₃) d'au moins 0,4% et de préférence d'au plus 1,5%.

La première feuille de verre notamment à base de silice, sodocalcique, silicosodo calcique, ou aluminosilicate, ou borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%.

Le vitrage selon l'invention comporte en outre :
- un premier trou traversant dans l'épaisseur de la deuxième feuille de verre, le premier trou traversant étant (de taille) centimétrique (suivant la surface du vitrage)
- un deuxième trou traversant, dans l'épaisseur de la deuxième feuille de verre, disjoint du premier trou traversant, le deuxième trou traversant étant (de taille) centimétrique (suivant la surface du vitrage).

Le deuxième trou traversant est sous le premier trou traversant, séparé d'une distance intertrous (Dt) d'au moins 8cm, ou 10cm ou encore 15 cm et de préférence d'au plus 50 cm ou 30cm.

La deuxième feuille de verre (à coins, quadrilatère, rectangulaire,..) présente une tranche longitudinale supérieure (en position montée).

En particulier, le premier trou traversant est débouchant sur ladite tranche longitudinale supérieure ou est fermé (entouré par la paroi de verre de la décimé feuille) le premier trou traversant est entre le deuxième trou et la tranche longitudinale supérieure (notamment distance intertrous Dt est défini comme la distance entre le point le plus bas B1 de la paroi délimitant le premier trou traversant et le point le plus haut A2 de la paroi délimitant le deuxième trou traversant, en position montée).

Ainsi selon l'invention, pour atteindre un niveau élevé de transmission on sélectionne :
1) un verre extérieur extraclair dans le proche infrarouge visé,
2) un verre intérieur plus absorbant dans le proche infrarouge visé et nécessairement évidé.

Cette solution est plus performante que celle basée sur deux verres extraclairs pleins. En outre en évitant l'usage d'un deuxième verre extraclair, elle améliore le confort (chaleur dans le véhicule), l'esthétique et est plus économique.

L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique Fe³⁺) et surtout dans le domaine du visible et proche infrarouge (absorption due à l'ion ferreux Fe²⁺) c'est pourquoi on réduit l'oxyde de fer dans la première feuille de verre.

Dans la deuxième feuille de verre, on peut donc choisir une teneur en oxyde de fer plus élevée.

L'invention convient tout particulièrement pour les vitrages (parebrise, lunette etc) aux véhicules autonomes ou semi autonomes : niveau L2+, L3, L4 et L5 (« full » autonome) ainsi que les véhicules type Robot Taxi et navette (Shuttle) etc.

L'angle du vitrage notamment un pare-brise de véhicule routier peut être typiquement entre 21° et 36° par rapport au sol et en moyenne de 30°.

Selon l'invention, on réalise deux trous traversant ce qui permet de séparer la partie émettrice et la partie réceptrice du système de vision infrarouge et éviter le recouvrement des faisceaux qui réduit le champ de vue vertical.

Cela permet aussi une plus grande liberté de design et notamment on peut choisir un deuxième trou plus étroit que le premier trou traversant.

Deux trous est plus aisé à produire et permet de maintenir une bonne résistance mécanique du vitrage qu'un seul grand trou.

La distance intertrous Dt minimale est choisi afin d'éviter une zone de fragilité entre les deux trous traversants.

La distance intertrous Dt maximale est choisie afin de cantonner le système lidar dans une zone restreinte du vitrage à savoir de préférence la partie supérieure et même centrale du vitrage (parebrise notamment).

Le vitrage comprend donc une première fenêtre de communication englobant une première zone de la première feuille de verre en regard dudit premier trou traversant.

Le vitrage comprend donc une deuxième fenêtre de communication englobant une deuxième zone de la première feuille de verre en regard dudit deuxième trou traversant. Mieux encore si on positionne l'émetteur du système de vision infrarouge en face du deuxième trou traversant et le récepteur du système de vision infrarouge en face du premier traversant on réduit la propagation de rayonnement parasite se propageant par réflexion totale dans le verre externe et/ou réfléchissant sur la face F2. On choisit deux trous verticaux plutôt que deux trous horizontaux (qui permettrait plus de discrétion) également pour éviter le rayonnement parasite.

Dans une réalisation :
- le premier trou traversant est de plus grande taille que le deuxième trou traversant, par exemple le premier trou traversant présente une première section transversale de surface S1 notamment trapézoïdale ou rectangulaire ou ovale ou en disque, de plus grande dimension (notamment horizontale) d'au plus 30cm ou 25cm ou 20cm, de préférence de plus petite dimension (notamment horizontale) d'au moins 3cm ou 5cm
- et de préférence le deuxième trou traversant présente une deuxième section transversale de surface S2 inférieure à S1, notamment trapézoïdale ou rectangulaire ou ovale ou en disque, en particulier de même forme que S1,, de plus grande dimension d'au plus 30cm ou 25cm ou 20cm ou 15cm et de préférence de plus petite dimension d'au moins 2, 3 ou 5cm.

En particulier le deuxième trou traversant présente une dimension horizontale L2, dite longueur, qui est inférieure à la dimension horizontale L1, dite longueur, du premier trou traversant.

Le premier trou traversant et le deuxième trou traversant sont de préférence dans une région périphérique, de préférence la partie supérieure du vitrage (en position montée), et même dans une région centrale périphérique. Les premier et deuxième trous traversant sont en particulier localisés dans une région et occupent moins de 10% ou même moins de 1% du vitrage. Par exemple le bord bas du deuxième trou traversant est au plus distant de 50cm de la tranche longitudinale supérieure du vitrage.

Le premier trou traversant peut être :
- trou fermé (entouré par la paroi de la deuxième feuille de verre), donc au sein du vitrage notamment espacé de la tranche du vitrage la plus proche d'au moins 3cm ou 5cm
- ouvert ou débouchant, formant une encoche (périphérique).

Et le deuxième trou traversant est de préférence fermé.

La forme et les dimensions des premier et deuxième trous traversants sont configurées selon les techniques de l'art de manière à collecter efficacement et sélectivement l'ensemble des rayonnements traversant le vitrage (pare-brise, lunette etc), notamment dans le cas du LIDAR ceux réfléchis issu d'une plage d'angle solide extérieure au véhicule et provenant de la zone en avant du véhicule que l'on cherche à capturer via le LIDAR.

Si le premier trou traversant est une encoche une partie de cette encoche sera masquée par le cadre du vitrage donc non fonctionnelle pour le système de vision. Si le premier trou est fermé est trop près du bord il est en de même.

Si le premier trou traversant est fermé, le bord du premier trou traversant le plus proche de la tranche du vitrage (bord longitudinal supérieure de préférence et notamment dans une zone centrale) est distant de cette tranche du vitrage (de la deuxième feuille) de préférence d'au moins 2cm ou 3cm et mieux 5cm.

Le premier trou traversant peut être dans la zone centrale du bord longitudinal supérieur du pare-brise, zone usuelle du rétroviseur intérieur (rétroviseur adjacent au premier trou traversant ou rétroviseur supprimé suivant les véhicules) zone où une couche de masquage en face F2 et/ou lié à l'intercalaire est généralement plus large que sur les zones latérales adjacentes longeant le bord longitudinal supérieur (passager, conducteur...).

Le premier trou traversant et même le deuxième trou traversant est de préférence plus long que haut.

De préférence, le premier trou traversant présente une dimension horizontale, dite longueur L1, (parallèle au bord longitudinal supérieur) et une dimension verticale du premier trou, dite hauteur H1 (perpendiculaire au bord longitudinal supérieur), la longueur L1 est plus grande que la hauteur H1 et même le deuxième trou traversant présente une dimension horizontale, dite longueur L2, (parallèle au bord longitudinal supérieur) et une dimension verticale, dite hauteur H2 (perpendiculaire au bord longitudinal supérieur), la longueur L2 est plus grande que la hauteur H2.

Et la dimension horizontale L2 du deuxième trou traversant est inférieure à la dimension horizontale L1 du premier trou. H1 et H2 peuvent être identiques ou similaires.

De préférence, le premier trou traversant présente une section, notamment trapézoïdale ou ovale ou disque, - de plus petite dimension d'au moins 3cm (adapté à la taille du système de vision infrarouge par exemple) - et de préférence de plus grande dimension (en particulier grand côté ou diamètre suivant l'horizontale L1) d'au plus 30cm, 25cm, 20cm (pour des aspects mécaniques).

De préférence, le deuxième trou présente une section, notamment trapézoïdale ou ovale ou disque, - de plus petite dimension d'au moins 2cm (adapté à la taille du système de vision infrarouge par exemple) - et de préférence de plus grande dimension (en particulier grand côté ou diamètre suivant l'horizontale L2) d'au plus 40cm, 30cm, 25cm, 20cm ou 15cm (pour des aspects mécaniques).

En particulier la section du premier trou est un quadrilatère, notamment rectangle ou un trapèze, avec :
- un premier (grand) côté longitudinal dit supérieur (le plus proche de la tranche du bord longitudinal supérieur du vitrage) de préférence parallèle à la tranche du bord longitudinal supérieur du vitrage et de longueur L1a de préférence d'au plus 30cm, 20cm ou 15cm ou 12cm et notamment espacé d'au moins 5cm ou 6cm de la tranche (du bord longitudinal supérieur du vitrage)
- un deuxième (grand) côté longitudinal dit inférieur (le plus éloigné de la tranche du bord longitudinal supérieur du vitrage, plus proche de la zone centrale) de préférence parallèle à la tranche du bord longitudinal supérieur du vitrage et de longueur L1b de préférence d'au plus 35cm ou 30cm ou 25cm ou 20cm et de préférence plus grande que celle du premier grand côté
- de hauteur (entre ces premier et deuxième grands côtés) de préférence d'au moins 5cm et même d'au plus 15cm.

En particulier la section du deuxième trou est un quadrilatère, notamment rectangle ou un trapèze, de préférence de même forme que le premier trou avec :
- un premier (grand) côté longitudinal dit supérieur (le plus proche de la tranche du bord longitudinal supérieur du vitrage) de préférence parallèle à la tranche du bord longitudinal supérieur du vitrage et de longueur L2a de préférence d'au plus 20cm ou 15cm ou 12cm et notamment espacé d'au moins 5cm ou 6cm de la tranche (du bord longitudinal supérieur du vitrage)
- un deuxième (grand) côté longitudinal dit inférieur (le plus éloigné de la tranche du bord longitudinal supérieur du vitrage, plus proche de la zone centrale) de préférence parallèle à la tranche du bord longitudinal supérieur du vitrage et de longueur L2b de préférence d'au plus 25cm ou 20cm et de préférence plus grande que celle du premier grand côté L2b
- de hauteur (entre ces premier et deuxième grands côtés) de préférence d'au moins 5cm et même d'au plus 20cm ou 15cm.

Le deuxième grand côté du premier trou traversant est plus court que le premier grand côté du deuxième trou traversant par exemple L2a, la hauteur H2 du deuxième trou traversant peut être identique ou similaire à la hauteur H1 du premier trou traversant. On définit une ligne centrale M passant par le milieu du bord supérieur qui peut être un axe de symétrie du vitrage. Les premier et deuxième trous traversants peuvent être centraux ainsi la ligne M passe par ces deux trous traversants et divise chaque trou traversant en deux parties notamment identiques.

Dans un mode de réalisation, le vitrage comporte une zone de chauffage (par fil(s), par couche) qui occupe tout ou partie de la surface du vitrage, classiquement en matériau transparent dans le visible mais pas forcément suffisamment transparent la longueur d'onde de travail dans l'infrarouge du système de vision infrarouge (LIDAR) dans une gamme allant de 800nm à 1800nm, en particulier entre 850nm et 1600nm. En particulier on peut avoir une première zone de chauffage dite principale, s'étendant sur toute ou partie du vitrage éventuellement en dehors de la zone en face du premier trou traversant et en face du deuxième trou traversant.

Dans un mode de réalisation, le vitrage selon l'invention peut comporter au moins un fil (un fil en serpentin par exemple) métallique notamment chauffant lié à l'intercalaire de feuilletage, au sein du feuilletage ou notamment côté face Fb notamment ancré sur la face Fb (ou encore côté Fa, ancré sur Fa) et éventuellement absent en face dudit premier trou traversant et dudit deuxième trou traversant.

On peut vouloir éviter le ou les fils chauffants en regard des premier et deuxième trous traversants pour des raisons de distorsions optiques.

On peut toutefois souhaiter que les deux fenêtres de communication soient préservées du givre ou de la buée notamment par chauffage.

Ceci peut être fait par un ou des fils métalliques chauffants localisés en regard des premier et deuxième trous traversants voire au voisinage ou encore par un ou des fils chauffants s'étendant sur toute ou partie du vitrage. L'arrangement du ou des fils peut permettre de conserver une transparence globale à la longueur d'onde de travail dans l'infrarouge.

Ceci peut être fait aussi par une couche chauffante locale en regard des premier et deuxième trous traversant ou même couche chauffante commune couvrant les deux fenêtres de communication, en matériau transparent à la longueur d'onde de travail dans l'infrarouge.

Plus précisément, on peut avoir :
- une première zone de chauffage locale en face dudit premier trou traversant, notamment par un arrangement de pistes ou fil(s) (fil(s) etc) d'un matériau absorbant -pour garder la transparence globale- à la longueur d'onde de travail dans l'infrarouge dans une gamme allant de 800nm à 1800nm, en particulier entre 850nm et 1600nm ou en matériau transparent à la longueur d'onde de travail dans l'infrarouge
- une deuxième zone de chauffage locale en face dudit deuxième trou traversant notamment par un arrangement de pistes ou fil(s) (fil(s) etc) d'un matériau absorbant -pour garder la transparence globale- à la longueur d'onde de travail dans l'infrarouge dans une gamme allant de 800nm à 1800nm, en particulier entre 850nm et 1600nm ou en matériau transparent à la longueur d'onde de travail dans l'infrarouge.

La première zone de chauffage locale peut s'étendre au-delà du premier trou traversant par exemple sur au plus 30mm. Elle peut être de même forme que le premier trou traversant, notamment homothétique (trapézoïdale etc) ou encore de toute autre forme par exemple rectangulaire (et trou trapézoïdal).

Pareillement, la deuxième zone de chauffage locale peut s'étendre au-delà du deuxième trou traversant par exemple sur au plus 30mm. Elle peut être de même forme que le traversant trou traversant, notamment homothétique ou encore de toute autre forme par exemple rectangulaire.

Une zone de chauffage peut être connectée à au moins deux amenées de courant qui sont en particulier des connecteurs plats ou (dans le cas d'une couche chauffante) des bus bars électroconducteurs (barre « omnibus ») destinés à la connexion à une source de tension de telle sorte qu'un trajet de courant pour un courant de chauffage est formée entre eux. Ce n'est pas toujours nécessaire d'avoir des bus bars dans le cas de fil(s) chauffant(s) pour le(s)quel(s) on peut utiliser un connecteur plat (utile pour des contacts ponctuels comme les fils) pour chaque zone de chauffage locale ou pour une zone de chauffage commune qui englobe les deux zones.

Ces première et deuxième zones de chauffage locales peuvent être disjointes avec des bus bar distincts ou avec au moins un bus bar en commun par exemple on peut avoir une zone de chauffage commune avec des bus bar communs.

On peut avoir un matériau chauffant (opaque discontinu ou transparent en couche), qui couvre à la fois le premier et le deuxième trou traversant.

Ainsi on utilise au moins deux bus bars de préférence tout ou partie décalés des premier et deuxième trous traversant, notamment :
- des premiers et deuxièmes bus bars communs aux première et deuxième zones de chauffage locales (de part et d'autre des premier et deuxième trous traversant)
- des premier, deuxième bus bus (de part et d'autre des premier et deuxième trous traversant) et un troisième bus bar commun entre le premier et deuxième trou traversant pour les deux zones de chauffage locales
- ou des premiers et deuxième bus bars pour la première zone de chauffage locale, des troisième et quatrième bus bars pour la deuxième zone de chauffage locale.

On peut en particulier avoir :
- une éventuelle zone de chauffage principale avec au moins deux amenées de courant typiquement en zone périphérique du vitrage (sur un même bord, sur deux bords opposés ou encore deux bords adjacents du vitrage), par exemple par un revêtement électroconducteur chauffant (troué au droit des premier et trous traversants)
- la première zone de chauffage locale avec au moins deux amenées de courant ou bus bar (barre « omnibus ») locaux, premier et deuxième bus bars au voisinage du premier trou traversant et de préférence décalés de la zone dudit premier trou traversant (ou dépassant sur au plus 10mm ou 5mm ou 3mm dans le deuxième trou), premier et deuxième bus bars locaux sur un même côté ou deux côtés (opposés ou adjacents) du premier trou traversant
- la deuxième zone de chauffage locale en face dudit deuxième trou traversant, notamment avec au moins deux amenées de courant ou bus bar (barre « omnibus ») locaux, troisième et quatrième bus bars au voisinage du deuxième trou traversant et de préférence décalés de la zone dudit deuxième trou traversant (ou dépassant sur au plus 10mm ou 5mm ou 3mm dans le deuxième trou), troisième et quatrième bus bars locaux sur un même côté ou deux côtés (opposés ou adjacents) du deuxième trou traversant.

Un ou les bus bars (locaux) peuvent être continus ou discontinues par tronçons.

On peut aussi avoir une zone de chauffage locale commune pour les premiers et deuxième trous traversant, avec deux bus bars locaux communs de part et d'autre des premier et deuxième trous traversant.

Selon une configuration le vitrage comporte la couche chauffante (revêtement électroconducteur) en matériau transparent à au moins une longueur d'onde dite de travail dans l'infrarouge dans une gamme allant de 800nm à 1800nm, en particulier entre 850nm et 1600nm, englobant une surface en regard des premier et deuxième trous pour former les première et deuxième zones de chauffage locales séparées par une discontinuité faite par laser etc) de la couche chauffante, par exemple de largeur subcentimétrique, dans la zone entre les premier et deuxième trous traversant.

Par exemple la discontinuité est horizontale, les premier, deuxième, troisième quatrième bus bars peuvent être verticaux ou horizontaux.

De préférence avec la couche chauffante (revêtement électroconducteur) en matériau transparent, les bus bars (pour chaque zone de chauffage ou pour la zone de chauffage commune) sont distants d'au plus 40cm, 30cm ou 20cm et/ou sont latéraux (obliques ou verticaux).

Les bus bars locaux (deux paires de bus bars, trois bus bars, ou deux bus bars communs) sont de préférence masqués de l'extérieur par un élément de masquage revêtement opaque et/ou film opaque en contact avec, sur la face F2 ou sur ou dans l'intercalaire de feuilletage.

Les bus bars (locaux) sont en forme de bande notamment rectangulaires qui sont (au moins en partie) hors de la zone du premier trou traversant et du deuxième trou traversants.

La largeur des busbars (locaux) est de préférence de 2mm à 30mm, de manière particulièrement préférée de 4mm à 20mm et en particulier de 10mm à 20mm.

Un busbar (local) notamment en couche (imprimé) contient de préférence au moins un métal, un alliage métallique, un composé métallique et/ou de carbone, en particulier de préférence un métal noble et, en particulier, de l'argent. Par exemple, la pâte d'impression contient de préférence des particules métalliques, des particules métalliques et / ou de carbone et, en particulier des particules de métal noble tel que des particules d'argent. L'épaisseur d'un bus bar en couche (imprimé) peut être de préférence de 5 µm à 40 µm, de manière particulièrement préférée de 8 µm à 20 µm et plus particulièrement de préférence de 8 µm à 12 µm.

En variante, cependant, on peut utiliser pour un ou chaque bus bar (local) une feuille électriquement conductrice, notamment une bande, par exemple rectangulaire. Le busbar contient alors, par exemple, au moins l'aluminium, le cuivre, le cuivre étamé, l'or, l'argent, le zinc, le tungstène et / ou de l'étain ou des alliages de ceux-ci. Ce bus bar en feuille (bande) a de préférence une épaisseur de 10µm à 500µm, de manière particulièrement préférée de 30µm à 300µm.

Le bus bar en feuille est en particulier utilisé pour les fils chauffants liés à l'intercalaire de feuilletage.

Les premier et deuxième bus bars sont de préférence distants d'au plus 1cm du premier trou traversant. Les troisième et quatrième bus bars sont de préférence distants d'au plus 1cm du deuxième trou traversant.

Dans le cas de bus bars locaux communs, le premier bus bar commun est de préférence distant d'au plus 1cm du premier trou traversant, le deuxième bus bar commun est distant d'au plus 1cm du deuxième trou traversant.

Le premier bus bar est de préférence (sensiblement) horizontal et le plus proche du bord longitudinal supérieur du vitrage et le deuxième bus bar est alors de préférence (sensiblement) horizontal, premier et deuxième bus bar de part et d'autre du premier trou traversant. Et le troisième bus bar est de préférence (sensiblement) horizontal et le plus proche du premier trou traversant et le quatrième bus bar est alors de préférence (sensiblement) horizontal, troisième et quatrième bus bar de part et d'autre du deuxième trou traversant.

L'alimentation électrique en tension est par exemple par 15V ou 48V.

On adapte à façon la longueur des bus bar par exemple égaux ou plus longs ou que les côtés des trous traversants leur faisant face.

De préférence les bus bars sont de part et d'autre de chacun des premier et deuxième trou traversant ou des deux des premier et deuxième trou traversant.

On souhaite rapprocher les bus bars (associés à une zone de chauffe) le plus possible pour augmenter la densité de puissance dans la couche chauffante transparente. De préférence la distance entre bus bars (de chaque zone de chauffe) est d'au plus 30mm ou 20mm.

L'alimentation électrique des (premier, deuxième, troisième, quatrième) bus bars peut être faire sans connectique, fil ('wireless' en anglais) et/ou avec un connecteur (fils, connecteurs plats etc). Pour que l'éventuelle connectique soit plus facilement hors champ du premier trou traversant (de la première fenêtre de communication) les troisième et quatrième bus bars horizontaux peuvent plus être plus longs que le deuxième trou traversant et plus long que le premier trou traversant (que les premier et deuxième bus bars horizontaux).

Les bus bars peuvent être latéraux c'est-à-dire à gauche et à droite des trous traversants le long des bords latéraux du vitrage.

Le premier bus bar peut être de préférence latéral (vertical ou oblique) et le deuxième bus bar est alors de préférence (sensiblement) latéral (vertical ou oblique), premier et deuxième bus bar de part et d'autre du premier trou traversant. Et le troisième bus bar est de préférence latéral (vertical ou oblique) et le quatrième bus bar est alors de préférence latéral (vertical ou oblique), troisième et quatrième bus bar de part et d'autre du deuxième trou traversant.

Les premier, deuxième, troisième, quatrième bus bars latéraux peuvent être alignés.

Dans une première configuration (avec bus bars dédiés horizontaux):
- le premier bus bar local (feuille ou revêtement) est adjacent et même parallèle à un premier grand côté du premier trou traversant trapézoïdal (ou rectangulaire) de préférence grand côté le plus proche du bord longitudinal supérieur du vitrage,
- le deuxième bus bar local (feuille ou revêtement) est adjacent et même parallèle à un deuxième grand côté du premier trou traversant trapézoïdal (ou rectangulaire), bus bars de part et d'autre du premier trou traversant.

Et même :
- le troisième bus bar local (feuille ou revêtement) est adjacent et même parallèle à un deuxième grand côté du deuxième trou traversant trapézoïdal (ou rectangulaire), de préférence grand côté le plus proche du premier trou traversant
- le quatrième bus bar local (feuille ou revêtement) est adjacent et même parallèle à un deuxième grand côté du deuxième trou traversant trapézoïdal (ou rectangulaire), bus bars de part et d'autre du deuxième trou traversant.

Dans une deuxième configuration (avec bus bars dédiés latéraux (vertical ou oblique)):
- le premier bus bar local (feuille ou revêtement) est adjacent et même parallèle à un premier petit côté du premier trou traversant trapézoïdal (ou rectangulaire)
- le deuxième bus bar local (feuille ou revêtement) est adjacent et même parallèle à un deuxième premier petit côté du premier trou traversant trapézoïdal (ou rectangulaire), bus bars de part et d'autre du premier trou traversant.

Et même :
- le troisième bus bar local (feuille ou revêtement) est adjacent et même parallèle à un deuxième petit côté du deuxième trou traversant trapézoïdal (ou rectangulaire)
- le quatrième bus bar local (feuille ou revêtement) est adjacent et même parallèle à un deuxième petit côté du deuxième trou traversant trapézoïdal (ou rectangulaire), bus bars de part et d'autre du deuxième trou traversant.

Ces troisième et quatrième bus bar peuvent être alignés des premier et deuxième bus bar ou décalés des premier et deuxième bus bars.

Dans une troisième configuration (avec bus bar horizontaux dédiés adjacents deux à deux) :
- le premier bus bar local adjacent et même parallèle à un premier grand côté du premier trou traversant trapézoïdal (ou rectangulaire), de préférence grand côté le plus proche du premier trou traversant
- le deuxième bus bar local adjacent au premier bus bar local le long dudit premier grand côté (le plus proche du bord longitudinal supérieur) de préférence grand côté le plus proche du premier trou traversant

Et même :
- le troisième bus bar local adjacent et même parallèle à un premier grand côté du deuxième trou traversant trapézoïdal (ou rectangulaire)
- le quatrième bus bar local adjacent au premier bus bar local le long dudit deuxième grand côté du deuxième trou traversant trapézoïdal

Dans une quatrième configuration on utilise seulement trois bus bars (un bus bar horizontal commun) pour les deux zones de chauffage locales :
le premier bus bar local adjacent et même parallèle à un premier grand côté du premier trou traversant trapézoïdal (ou rectangulaire), notamment grand côté le plus proche du bord longitudinal supérieur,
- le deuxième bus bar local adjacent et même parallèle à un premier grand côté du deuxième trou traversant trapézoïdal (ou rectangulaire),
- le troisième bus bar local adjacent et même parallèle à un premier grand côté du deuxième trou traversant trapézoïdal (ou rectangulaire)
- le quatrième bus bar local adjacent au premier bus bar local le long dudit deuxième grand côté du deuxième trou traversant trapézoïdal.

Dans une quatrième configuration on utilise seulement deux bus bars (communs, horizontaux) pour les deux zones de chauffage locales :
le premier bus bar local adjacent et même parallèle à un premier grand côté du premier trou traversant trapézoïdal (ou rectangulaire), notamment grand côté le plus proche du bord longitudinal supérieur,
- le deuxième bus bar local adjacent et même parallèle à un premier grand côté du deuxième trou traversant trapézoïdal (ou rectangulaire), notamment grand côté le plus proche du bord longitudinal supérieur.

Dans une cinquième configuration on utilise seulement deux bus bars (communs) latéraux (vertical ou oblique) pour les deux zones de chauffage locales :
le premier bus bar local adjacent et même parallèle à un premier petit côté du premier trou traversant trapézoïdal (ou rectangulaire),
- le deuxième bus bar local adjacent et même parallèle à un premier grand côté du deuxième trou traversant trapézoïdal (ou rectangulaire) ;

Dans le cas de trous traversants ronds ou ovales les bus bars (sensiblement horizontaux ou latéraux, bus bars communs ou dédiés) peuvent être courbes pour suivre la forme des trous traversants.

On peut préférer de bus bars latéraux verticaux ou obliques (parallèles par rapport aux petits côtés des trous traversants) car les bus bars horizontaux peuvent générer des surépaisseurs locales favorisant les distorsions.

Pour faciliter la connectique, dans une sixième réalisation, un ou des connecteurs plats ou tous les bus bars des première et deuxième zones de chauffage locales- bus bars communs ou dédiés, en particulier premier, deuxième, troisième bus bar, quatrième bus bar -, sont regroupés dans une zone périphérique au premier trou traversant, notamment qui est située entre le bord longitudinal supérieur et le premier trou traversant et/ou adjacente à un bord latéral du premier trou traversant.

La première ou deuxième zone de chauffage locale et/ou zone de chauffage globale comporte par exemple un ou une pluralité de fils métalliques individuels, appelés « fils métalliques chauffants » qui relient des « busbars » entre eux. Le courant de chauffage passe par ces fils métalliques individuels.

En particulier, le vitrage peut comporter au moins un premier fil métallique (un fil en serpentin par exemple) notamment chauffant lié à l'intercalaire de feuilletage en regard du premier trou traversant notamment :
- côté face Fb notamment ancré sur la face Fb ou
- au sein de l'intercalaire de feuilletage entre un premier feuillet (côté face F2) et deuxième feuillet intercalaire (côté face F3), feuillets d'épaisseurs égales ou distinctes etc
- ou même notamment côté face Fa notamment ancré sur la face Fa.

Et même :
au moins un fil métallique notamment chauffant distinct ou correspondant audit premier fil métallique, en regard du deuxième trou traversant lié à l'intercalaire de feuilletage
- côté face Fb notamment ancré sur la face Fb ou
- au sein de l'intercalaire de feuilletage entre un premier feuillet (côté face F2) et deuxième feuillet intercalaire (côté face F3), feuillets d'épaisseurs égales ou distinctes etc
- ou même notamment côté face Fa notamment ancré sur la face Fa.

Et éventuellement le premier fil (ou des premiers fils) est en regard du premier trou traversant, notamment entre les premier et deuxième trous traversants et en regard du deuxième trou traversant.

On peut utiliser deux bus bars communs seulement comme déjà expliqué précédemment.

On peut ainsi utiliser un ou des fils métalliques en commun pour les deux trous.

Le ou les fils métalliques chauffants notamment ont une épaisseur inférieure ou égale à 0,1 mm de préférence de cuivre, de tungstène, d'or, d'argent ou aluminium ou d'alliages d'au moins deux de ces métaux.

Le ou les fils sont avantageusement très minces de manière à ne pas, ou seulement très peu, détériorer la transparence du vitrage. De préférence, le ou les fils métalliques ont une épaisseur inférieure ou égale à 0,1 mm, en particulier comprise entre 0,02 et 0,04 mm, et idéalement entre 0,024 mm et 0,029 mm. Le ou les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine.

Le ou les fils métalliques sont de préférence isolés électriquement.

Dans une réalisation, le vitrage selon l'invention comporte un élément fonctionnel :
- sur l'une des faces Fa ou Fb de l'intercalaire de feuilletage (mono ou mutifeuillet)
- ou au sein dudit intercalaire de feuilletage, entre un premier feuillet et deuxième feuillet intercalaire,
élément fonctionnel (flexible, courbé ) -d'épaisseur submilimétrique- comportant une feuille (flexible) d'épaisseur submilimétrique notamment d'au plus 200µm ou 100µm, notamment polymère, par exemple polymère conducteur, et éventuellement sur une première face principale orientée côté face F2 ou F3 un revêtement notamment électroconducteur ou un élément opaque dans le visible (film ou revêtement), élément fonctionnel :
- avec une première zone en regard du premier trou traversant de préférence avec le revêtement électroconducteur
- avec une deuxième zone en regard du deuxième trou traversant de préférence avec le revêtement électroconducteur.

Ledit élément fonctionnel notamment un élément chauffant est transparent à la longueur d'onde de travail dans l'infrarouge dans une gamme allant de 800nm à 1800nm, en particulier entre 850nm et 1600nm au moins dans les première et deuxième zones en regard du premier trou traversant et du deuxième trou traversant.

Ledit élément fonctionnel est de préférence présent entre les premier et deuxième trous traversant, occupant ainsi une surface englobant les premier et deuxième trous traversants, le revêtement (électroconducteur) optionnel est éventuellement absent ou dépassant d'au plus 1cm, 5mm ou 3mm (des parois) des premier et deuxième trous traversants.

On peut envisager un élément fonctionnel opaque à la longueur de travail (film et/ou revêtement dessus) en dehors des zones des trous traversants.

En dehors des zones des trous traversants, cet élément fonctionnel (chauffant) est par exemple opaque ou rendu opaque dans le visible. Par exemple il prolonge une couche de masquage périphérique (émail par exemple) notamment en face F2 ou sur l'intercalaire (encre) qui est une bande afin de créer (vue de l'extérieur une zone opaque élargie notamment en zone centrale. De préférence l'élément opaque ou rendu opaque a sensiblement la même couleur (noir etc) et/ou densité optique que la couche de masquage périphérique (noir etc). Par exemple l'écart de densité optique entre élément opaque et couche de masquage opaque est d'au plus 5%, 3%, 2% et même ils sont de même couleur.

Cet élément fonctionnel peut être local, dans la région des trous traversants (occupant une fraction de surface du vitrage).

L'élément fonctionnel peut être local, dans la région des premier et deuxième trous traversants et occuper moins de 30, 10%, 5% du vitrage.

L'élément fonctionnel peut être de toute forme général rectangulaire, carré, identique et même homothétique à la forme du premier (ou deuxième) trou traversant.

L'élément fonctionnel si nécessaire peut être bimatière au droit des premier et deuxième trous traversants pour être transparent à la longueur d'onde de travail.

La distance entre le bord longitudinal supérieure et l'élément fonctionnel peut être d'au plus 30mm, 20mm 15 et même 10mm.

En particulier :
- l'élément fonctionnel (la feuille) comporte sur la première face principale orientée côté face F2 ou F3 un revêtement électroconducteur chauffant en regard du premier trou traversant et en regard du deuxième trou traversant, formant première et deuxième zones de chauffage locales (disjointes ou non, comme déjà décrit précédemment)
- et/ou l'élément fonctionnel (la feuille) comporte sur la première face principale ou la deuxième principale un élément de masquage opaque (film opaque lié ou revêtement) décalé au moins en partie (absent du centre) du premier trou traversant et décalé au moins en partie (absent du centre) du deuxième trou traversant.

La zone opaque peut occuper sensiblement toute la surface de l'élément fonctionnel, ou au moins 80% ou 90% et avec deux ouvertures au droit des premier et deuxième trous traversants. Les dimensions des deux ouvertures peuvent être plus petites, égale ou supérieures à celles des premier et deuxième trous traversants.

L'élément de masquage opaque (film opaque lié ou revêtement) peut dépasser dans le premier trou traversant notamment d'au plus 50mm, 20mm, 10mm et même d'au moins 5mm, 7mm, 2mm.

Si le deuxième trou traversant est plus petit que le premier trou traversant alors la deuxième zone avec le revêtement opaque peut être également plus petite que la première zone avec le revêtement.

L'élément de masquage opaque (film opaque lié ou revêtement) peut dépasser dans le deuxième trou traversant notamment d'au plus 50mm, 20mm, 10mm et même d'au moins 5mm, 7mm, 2mm.

Les bus bars (horizontaux ou latéraux etc) sont sur la feuille éventuellement sous ou sur l'élément de masquage (sur la même première face, par exemple orienté vers face Fb) ou espacés de l'élément de masquage (sur la même première face, par exemple orienté vers face Fb ou sur la deuxième face principale).

L'élément fonctionnel peut avoir une surface globale (rectangulaire, trapézoïdale etc) englobant les première et deuxième zones.

En particulier le film forme une surface globale rectangulaire englobant les trous par exemple chacun de section trapézoïdale.

Par exemple le film comporte un revêtement électroconducteur présent au moins en regard des trous traversant par exemple de forme homothétique aux trous (trapézoïdale) ou englobant les trous (rectangle et des trous trapézoïdaux). Par exemple le revêtement électroconducteur comporte deux zones disjointes (rectangulaires ou trapézoïdales ou ovales ...).

Le revêtement électroconducteur (chauffant ou non) peut aussi occuper sensiblement toute la surface du film ou moins 70%, 80%. Les éventuels bus bars liés au revêtement conducteur sont en dehors des premières et deuxième zones mais au voisinage de préférence par exemple à moins de 1cm.

Le revêtement peut être orienté vers face F2 ou côté trou traversant. Son épaisseur peut être submicronique. C'est un mono ou multicouches notamment minéral.

L'élément peut avoir une forme (trapézoïdale, rectangulaire etc avec des coins arrondis.

La feuille en matière polymère de l'élément fonctionnel peut être un film plastique notamment d'une épaisseur comprise entre 10 et 100µm. Le film plastique peut être plus largement en polyamide, polyester, polyoléfine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M^{®}, mais aussi de nombreux autres films (par exemple en PC, PE, PEN, PMMA, PVC).

L'élément fonctionnel (la feuille) peut comporter sur la première face principale (côté revêtement électrocondcuteur ou côté opposé) ou une face opposée un ou d'autres éléments en particulier capteurs d'humidité, capteur de pluie, de lumière (photodiode), capteur formant antenne, pour recevoir et/ou transmettre des ondes électromagnétiques (radio, TV notamment réseau local de communication comme le BLUETOOTH, le WIFI, le WLAN), un capteur acoustique (à base d'un élément piézoélectrique), un détecteur de signal ultrasonore, un capteur de diagnostic, un détecteur de commande (essuie-glace, etc), par exemple commande IR ou commande vocale (piézoélectrique), un écran électroluminescent (organique ou inorganique), un écran à cristaux liquides ou tout autre dispositif électrocommandable etc.

Le nombre d'ouverture de l'élément fonctionnel opaque est adapté en fonction du nombre de capteurs et caméra, écran(s), dispositif le nécessitant.

Par ailleurs, cumulativement ou alternativement à l'élément fonctionnel lié à l'intercalaire, le vitrage peut comporter sur la face F2, un élément fonctionnel d'épaisseur submilimétrique, notamment d'au plus 200µm ou 100µm, notamment un revêtement fonctionnel ou un film fonctionnel collé sur la face F2 (par de la colle par exemple sensible à la pression,), élément fonctionnel :
- avec une première zone en regard du premier trou traversant
- avec une deuxième zone en regard du deuxième trou traversant,

de préférence s'étendant sous l'intercalaire de feuilletage entre les première et deuxième zones,
élément fonctionnel transparent à au moins une longueur d'onde dite de travail dans l'infrarouge dans une gamme allant de 800nm à 1800nm, en particulier entre 850nm et 1600nm au moins dans les première et deuxième zones.

L'élément fonctionnel sur la face F2 peut être local, dans la région des premier et deuxième trous traversant et occuper moins de 30, 10%, 5% du vitrage.

L'élément fonctionnel sur la face F2 peut être de toute forme général rectangulaire, carré, identique et même homothétique à la forme du premier (ou deuxième) trou traversant.

L'élément fonctionnel sur la face F2 peut être un revêtement qui :
- est espacé d'une couche adjacente sur la face F2, en particulier couche de masquage opaque (noire, émail) avec des épargnes au droit des premier et deuxième trous traversant, donc
- ou recouvre ou est sous, sur moins de 5cm, de 1 cm, une couche adjacente sur la face F2 en particulier couche de masquage opaque (notamment noire, émail ou autre) avec des épargnes au droit des premier et deuxième trous traversant.

On souhaite augmenter la fiabilité des LIDAR, aussi de préférence le vitrage selon l'invention comporte de préférence un revêtement antireflet à au moins une longueur d'onde dite de travail dans l'infrarouge dans une gamme allant de 800nm à 1800nm, en particulier entre 850nm et 1600nm, revêtement antireflet notamment à base de silice (nano)poreuse :
- avec une première surface antireflet libre dans la zone du premier trou traversant
- avec une deuxième surface antireflet libre dans la zone du deuxième trou traversant.

Eventuellement le revêtement antireflet s'étend sous l'intercalaire de feuilletage entre les première et deuxième surfaces antireflet libres formant ainsi une seule surface, le revêtement antireflet sur la face F2 étant notamment sous une éventuelle une couche fonctionnelle, ou est sur une éventuelle une couche fonctionnelle qui est sur la face F2, en particulier couche de masquage.

La première surface libre du revêtement antireflet peut être sous le premier trou (sur la face F2, sur un support côté face Fb), dans le premier trou ou même saillant du premier trou côté habitacle sur une première pièce éventuellement présente dans le premier trou. La deuxième surface libre du revêtement antireflet peut être sous le premier trou (sur la face F2, sur un support côté face Fb), dans le deuxième trou ou même saillant du deuxième trou côté habitacle sur une deuxième pièce éventuellement présente dans le deuxième trou.

Le revêtement antireflet, notamment à base de silice (nano)poreuse, peut être en particulier sur la face F2, l'intercalaire de feuilletage présente alors un premier trou traversant d'intercalaire en regard du premier trou traversant, et un deuxième trou traversant d'intercalaire en regard du deuxième trou traversant.

Le revêtement antireflet est de préférence local.

Le revêtement antireflet notamment local peut dépasser de préférence d'au plus 100mm, 50mm, 30mm ou 20mm ou 10mm entre la face F2 et la face Fa (au voisinage de chacun des premier et deuxième trous traversant).

Entre la face F2 et la face Fa, le revêtement antireflet peut être sur ou sous une couche fonctionnelle qui est sur la face F2 notamment une couche de masquage opaque ou une couche chauffante ou de contrôle solaire.

La face F2 comporte alors un revêtement antireflet commun avec une surface libre dans tous les premier et deuxième trous traversant ou un revêtement antireflet (AR) local distinct pour chaque premier et deuxième trou traversant, et par exemple les revêtements AR locaux présentent des épaisseurs distinctes.

Les premier et deuxième trous traversants sont de préférence dans une zone périphérique du vitrage feuilleté de préférence en bord longitudinal supérieur et mieux dans une région centrale périphérique et le revêtement antireflet est local et dans cette région périphérique.

Les premier et deuxième trous traversants présentent chacun une forme donnée notamment de section droite convexe, par exemple trapézoïdale ou rectangulaire ou carrée ou ellipsoïdale ou ovale ou ronde. Le revêtement antireflet peut présenter une forme homothétique.

Le revêtement antireflet peut avoir la même forme que la section du premier trou et du deuxième trou par exemple trapézoïdale ou encore rectangulaire etc.

Le revêtement antireflet peut être uniquement en regard des premier et deuxième trous traversant ou couvrir une surface les englobant.

Bien que moins préféré à priori, le revêtement antireflet peut être uniquement dans une zone centrale en regard dudit premier trou traversant, il ne dépasse pas du premier trou traversant et même est espacé du bord du premier trou traversant de préférence d'au plus 1cm. Par exemple la surface libre dans le premier trou traversant présente une longueur et/ou un côté d'au moins 5cm, 10cm, 15cm et de préférence d'au plus 30cm. Et, le revêtement antireflet peut être uniquement dans une zone centrale en regard dudit deuxième trou traversant, il ne dépasse pas du deuxième trou traversant et même est espacé du bord du deuxième trou traversant de préférence d'au plus 1cm. Par exemple la surface libre dans le deuxième trou traversant présente une longueur et/ou un côté d'au moins 5cm, 10cm, 15cm et de préférence d'au plus 30cm.

L'ensemble première feuille de verre avec ledit revêtement antireflet présente :
- une transmission totale d'au moins 90,0%, 91,0%, ou même 92,0% ou 93% à la longueur d'onde de travail notamment 905±5nm et/ou 1550±5nm mesurée à la normale (90°) ou même de préférence aussi à 60° ou même jusqu'à 60° par rapport au plan (local) de la première feuille par exemple côté face F2 et/ou côté face F1
- et/ou le revêtement antireflet augmente d'au moins 1%, 2% ou 2,5% ou même 3,0% à la longueur d'onde de travail la transmission totale de la première feuille de verre mesuré à la normale (90°) ou même de préférence aussi à 60° et même jusqu'à 60° par rapport au plan (local) de la première feuille par exemple côté face F2 et/ou côté face F1.

La transmission dans l'infrarouge est mesurée par exemple avec un spectromètre Fourier tel que le BrukerVertex-70.

Naturellement si on utilise un système de vision multi spectral, on peut également souhaiter que l'ensemble première feuille de verre avec ledit revêtement antireflet présente :
- une transmission totale d'au moins 90%, 91%, ou même 92% à une autre longueur d'onde de travail dans le visible notamment entre 500nm et 600nm mesurée à la normale ou même de préférence de 90° jusqu'à 60° par rapport au plan de la première feuille, par exemple côté face F2 et/ou côté face F1
- et/ou le revêtement antireflet augmente d'au moins 1%, 2% ou 2,5% ou même 3% à la deuxième longueur d'onde de travail la transmission totale de la première feuille de verre mesurée à la normale ou même de préférence de 90° jusqu'à 60° par rapport au plan de la première feuille par exemple côté face F2 et/ou côté face F1.

Le revêtement antireflet peut comprendre un empilement de couches minces diélectriques (d'oxyde et/ou de nitrures de métal ou de silicium par exemple) alternant haut et bas indices de réfraction (à la longueur d'onde de travail).

Le revêtement antireflet comporte de préférence une couche (fonctionnelle) de silice poreuse, notamment nanoporeuse, de préférence sol gel.

Dans un premier mode de réalisation, les pores sont les interstices d'un empilement non compact des billes nanométriques, notamment de silice, cette couche étant décrite par exemple dans le document US20040258929.

Dans un deuxième mode de réalisation, la couche poreuse est obtenue par le dépôt d'un sol de silice condensé (oligomères de silice) et densifié par des vapeurs de type NH3, cette couche étant décrite par exemple dans le document WO2005049757.

Dans un troisième mode de réalisation, la couche poreuse peut aussi être de type sol gel telle que comme décrite dans le document EP1329433. La couche poreuse peut aussi être obtenue avec d'autres agents porogènes connus : des micelles de molécules tensioactives cationiques en solution et, éventuellement, sous forme hydrolysée, ou de tensioactifs anioniques, non ioniques, ou des molécules amphiphiles, par exemple des copolymères blocs.

Dans un quatrième mode de réalisation, la couche poreuse peut aussi être de type sol gel telle que comme décrite dans le document WO2008/059170. La couche poreuse peut ainsi être obtenue avec des agents porogènes qui sont de préférence des billes polymériques.

Le revêtement antireflet notamment de silice poreuse selon l'invention peut avoir une épaisseur avantageusement comprise entre 10 nm et 10 µm (ces valeurs limites étant incluses), en particulier 50 nm et 1 µm et encore plus préférentiellement entre 70 et 500nm.

La couche de silice poreuse (ou nanoporeuse) peut présenter des pores fermés d'au moins 20nm, 50nm ou 80nm éventuellement la couche fonctionnelle peut comporter des pores avec une concentration augmentant en direction de la surface libre.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

La silice poreuse peut être dopée par exemple pour améliorer encore davantage sa tenue hydrolytique dans le cas d'applications où une bonne résistance est nécessaire (façades, extérieurs etc). Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

Le revêtement antireflet peut comporter une sous couche de protection chimique notamment d'épaisseur d'au plus 200nm par exemple, notamment une couche de silice dense, par sol gel surmonté d'une couche fonctionnelle sol gel de silice poreuse.

La sous-couche peut être à base de silice ou de dérivés au moins partiellement oxydés du silicium choisi parmi le dioxyde de silicium, des oxydes de silicium sous stoechiométriques, l'oxycarbure, l'oxynitrure ou l'oxycarbonitrure de silicium.

La sous-couche s'avère utile quand la surface sous-jacente est en verre silicosodocalcique car elle joue le rôle de barrière aux alcalins.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette dernière technique permet d'obtenir des couches en SiOₓC_{y} ou en SiO₂ assez aisément, notamment par dépôt directement sur le ruban de verre float dans le cas de substrats verriers. Mais on peut aussi effectuer le dépôt par une technique sous vide, par exemple par pulvérisation cathodique à partir d'une cible de Si (éventuellement dopée) ou d'une cible en sous-oxyde de silicium (en atmosphère réactive oxydante et/ou nitrurante par exemple). Cette sous-couche a de préférence une épaisseur d'au moins 5 nm, notamment une épaisseur comprise entre 10nm et 200 nm, par exemple entre 80nm et 120 nm.

Le revêtement antireflet peut aussi comporter une surcouche si elle n'altère pas les propriétés antireflet.

On peut aussi mettre un revêtement antireflet également en face F1 en regard de celui en face F2.

Plus largement, en regard du premier trou traversant, l'intercalaire de feuilletage présente un premier trou traversant ou partiel d'intercalaire et en regard du deuxième trou traversant, l'intercalaire de feuilletage présente un trou traversant ou partiel d'intercalaire

Sans sortir du cadre de l'invention, l'intercalaire de feuilletage peut bien entendu comprendre plusieurs feuillets en matière thermoplastique de natures différentes, par exemple de duretés différentes pour assurer une fonction acoustique, comme par exemple décrit dans la publication US 6132882, notamment une ensemble de feuillets de PVB de duretés différentes. De même l'une des feuilles de verres peut être amincie par rapport aux épaisseurs classiquement utilisées.

L'intercalaire de feuilletage peut selon l'invention présenter une forme en coin, notamment en vue d'une application HUD (Head Up Display pour visualisation tête haute). Egalement l'un des feuillets de l'intercalaire peut être teinté dans la masse.

L'intercalaire de feuilletage préféré comprend de 60% à 80% et même de 70% à 75% de PVB, 25 à 30% de plastifiant et éventuellement au plus 1% d'adjuvants.

Comme intercalaire de feuilletage usuel, outre le PVB (de préférence avec des plastifiants), on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm.

L'intercalaire de feuilletage peut comprendre un autre film plastique fonctionnel (transparent, clair ou teinté) par exemple un film en poly(éthylène téréphtalate) PET porteur d'une couche athermique, électroconductrice etc par exemple on a PVB/ film fonctionnel/PVB entre les faces F2 et F3.

Le film plastique peut être d'une épaisseur comprise entre 10 et 100 µm. Le film plastique peut être plus largement en polyamide, polyester, polyoléfine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M^{®}, mais aussi de nombreux autres films (par exemple en PC, PE, PEN, PMMA, PVC).

L'intercalaire de feuilletage peut comporter un PVB (de préférence avec des plastifiants), éventuellement comportant PVB/film fonctionnel tel que film polymère avec revêtement athermique /PVB, PVB éventuellement acoustique, PVB teinté ayant deux trous traversants ou partiels au droit des premier et deuxième trous traversants.

Le vitrage peut comporter un premier trou traversant total qui peut être composé :
- d'un premier trou traversant d'intercalaire dans l'intercalaire de feuilletage (mono ou multi feuillets) de largeur D1
- et du premier trou traversant dans la deuxième feuille de verre de largeur D2

Ces trous sont d'axe de symétrie confondu ou proche et de préférence de largeur identique (avant et même après feuilletage).

Et le vitrage peut comporter un deuxième trou traversant total qui peut être composé :
- d'un deuxième trou traversant d'intercalaire dans l'intercalaire de feuilletage (mono ou multi feuillets) de largeur D'1
- et du deuxième trou traversant dans la deuxième feuille de verre de largeur D'2. Ces trous sont d'axe de symétrie confondu ou proche et de préférence de largeur identique (avant et même après feuilletage).

Le premier trou d'intercalaire peut être plus large que le premier trou traversant (au moins avant feuilletage) en particulier d'au plus 5mm ou 10mm. Le deuxième trou d'intercalaire peut être plus large que le deuxième trou traversant (au moins avant feuilletage) en particulier d'au plus 5mm ou 10mm.

Naturellement chaque premier ou deuxième trou traversant des verres peut être un espace vide ou au moins qui n'est pas rempli (dans sa partie centrale) par une matière quelconque trop absorbante dans le proche infrarouge visé qui serait dans le champ du système de vision infrarouge.

On peut prévoir un premier insert (fermé, ouvert) de type bague (monolithique ou en plusieurs morceaux disjoints ou reliés etc) notamment de largeur d'au plus 1,5cm par exemple en matière souple, polymère (polycarbonate, polyamide, polyoléfine, polypropylène, polytétrafluoroéthylène etc) :
- monté sur (notamment collé ou en force) la paroi de la deuxième feuille de verre délimitant (en partie haute) le premier trou traversant
- et/ou lorsque l'intercalaire est tout ou partie troué au droit du premier trou traversant (côté face F3) voire également en contact avec la paroi de l'intercalaire de feuilletage et même sur la face F2.

Ce premier insert bague peut s'étendre au-delà du premier trou traversant, notamment sur la face F4.

Ce premier insert bague peur servir :
- pour placer dans le premier trou tout ou partie du système de vision infrarouge ou une optique intermédiaire
- pour placer dans le premier trou tout ou partie de moyens de fixation du système de vision infrarouge.

Si le premier trou de l'intercalaire est fait avant feuilletage et le premier insert bague est placé avant le feuilletage au niveau de l'intercalaire (notamment au plus 150°C et sous pression notamment), ce premier insert pour servir pour éviter ou réduire le fluage de l'intercalaire troué.

On peut prévoir de la même façon un deuxième insert (fermé, ouvert) de type bague (monolithique ou en plusieurs morceaux disjoints ou reliés etc) notamment de largeur d'au plus 1,5cm par exemple en matière souple, polymère (polycarbonate, polyamide, polyoléfine, polypropylène polytétrafluoroéthylène etc) :
- monté sur (notamment collé ou en force) la paroi de la deuxième feuille de verre délimitant (en partie haute) le deuxième trou traversant
- et/ou lorsque l'intercalaire est tout ou partie troué au droit du deuxième trou traversant (côté face F3) voire également en contact avec la paroi de l'intercalaire de feuilletage et même sur la face F2.

Ce deuxième insert bague peut s'étendre au-delà du deuxième trou traversant, notamment sur la face F4.

Dans un mode de réalisation, à des fins de sécurité, en regard du premier trou traversant, l'intercalaire de feuilletage présente un premier trou traversant d'intercalaire et, sous et/ou dans le premier trou traversant, est présente une première pièce (courbée, flexible) transparente à la longueur d'onde de travail, notamment d'épaisseur d'au plus 1cm ou 5mm ou 1mm, qui est collée sur la face F2 nue ou revêtue d'une première couche fonctionnelle transparente à au moins une longueur d'onde de travail dans l'infrarouge dans une gamme allant de 800nm à 1800nm, en particulier entre 850nm et 1600nm. et de préférence en regard du deuxième trou traversant, l'intercalaire de feuilletage présente un deuxième trou traversant et, sous et/ou dans le deuxième trou traversant est présente une deuxième pièce (courbée, flexible) , notamment d'épaisseur d'au plus 1cm ou 5mm ou 1mm, transparente à la longueur d'onde de travail qui est collée sur la face F2 nue ou revêtue d'une deuxième couche fonctionnelle transparente à au moins une longueur d'onde de travail dans l'infrarouge dans une gamme allant de 800nm à 1800nm, en particulier entre 850nm et 1600nm notamment distincte ou prolongement de la première couche fonctionnelle.

Les premiers et deuxième couches fonctionnelles (revêtement par exemple chauffant) peuvent être disjointes ou non par exemple une surface fonctionnelle englobe première et deuxième couches (zones) fonctionnelles.

La première pièce (et la deuxième pièce) peut être en matière polymère, en verre extraclair.

L'épaisseur de colle est par exemple inférieure à l'épaisseur de la première feuille notamment submillimétrique. La première pièce est alors à la fois sous et dans le premier trou traversant, même affleurant au trou, voire même en saillie du trou.

La première pièce (et/ou la deuxième pièce) peut être collée par toute colle connue.

La première pièce peut être de largeur inférieure à la largeur du premier trou traversant, laissent un espace entre le premier trou traversant et la première face qui est par exemple d'au plus 5mm ou 3mm et même d'au moins 0,5mm. Cet espace est vide ou comblé toute ou partie par une matière (notamment transparente à la longueur d'onde de travail) par exemple une résine, une colle.

De manière similaire, la deuxième pièce peut être de largeur inférieure à la largeur du deuxième trou traversant, laissent un espace entre le deuxième trou traversant et la première face qui est par exemple d'au plus 5mm ou 3mm et même d'au moins 0,5mm. Cet espace est vide ou comblé toute ou partie par une matière (notamment transparente à la longueur d'onde de travail) par exemple une résine, une colle.

La face externe de la première pièce peut être sous ou dans le premier trou traversant ou en saillie côté face habitacle. La face externe de la deuxième pièce peut être sous ou dans le premier trou traversant ou en saillie côté face habitacle.

La première pièce comporte de préférence une face principale externe avec un revêtement antireflet à au moins une longueur d'onde dite de travail dans l'infrarouge dans une gamme allant de 800nm à 1800nm, en particulier entre 850nm et 1600nm, notamment à base de silice (nano)poreuse et de préférence la deuxième pièce comporte une face principale externe avec un revêtement antireflet à au moins une longueur d'onde dite de travail dans l'infrarouge dans une gamme allant de 800nm à 1800nm, en particulier entre 850nm et 1600nm.

Comme déjà évoqué, le vitrage peut comporter entre la face F2 et Fa, une couche de masquage opaque notamment un émail (noir etc) sur la face F2 et/ou sur la face Fa (en particulier sur Fa une encre notamment noire etc), en bordure du premier trou traversant entre la face F2 et Fa, en particulier en zone périphérique et même centrale et de préférence le long du bord longitudinal du vitrage, le revêtement antireflet (notamment la couche de silice poreuse ou une éventuelle sous couche de silice dense) étant éventuellement en contact de la couche de masquage opaque.

La couche de masquage est par exemple en face F2 et le revêtement antireflet est sur la couche de masquage ou sous la couche de masquage et/ou la couche de masquage est sur la face Fa et le revêtement antireflet est en contact avec la couche de masquage. La couche de masquage peut alors présenter une épargne au droit dudit premier trou traversant (au moins dans la zone centrale) et de préférence dépasse d'au plus 50mm, 30mm ou 20mm ou 10mm, 7mm ou 5mm dans le dit premier trou traversant et/ou laisse le revêtement antireflet avec la surface libre dans le premier trou, surface libre (non revêtue de couche de masquage) présentant une longueur d'au moins 5cm, 10cm, 15cm et de préférence d'au plus 30cm.

La couche de masquage peut alors présente une épargne au droit dudit deuxième trou traversant (au moins dans la zone centrale) et de préférence dépasse d'au plus 50mm, 30mm ou 20mm ou 10mm, 7mm ou 5mm dans ledit deuxième trou traversant et/ou laisse le revêtement antireflet avec la surface libre dans le deuxième trou, surface libre (non revêtue de couche de masquage) présentant une longueur d'au moins 5cm, 10cm, 15cm et de préférence d'au plus 30cm.

Cette couche de masquage va masquer le système de vision infrarouge et par exemple son boitier.

Une couche de masquage peut être une couche imprimée sur l'intercalaire de feuilletage par exemple sur le PVB.

Le revêtement antireflet (notamment la couche de silice poreuse ou une éventuelle sous couche de silice dense) dans le premier et deuxième trou peut être aussi espacé de la couche de masquage (par exemple qui est en face F2 notamment de l'émail) ou au moins ne la recouvre pas.

La couche de masquage opaque est de préférence une couche continue (aplat avec un bord plein ou en variante un bord en dégradé (ensemble de motifs).

La couche de masquage peut être à 2mm ou 3mm (moins de 5 mm) de la tranche du vitrage (la plus proche).

La couche de masquage peut être un bandeau encadrant le vitrage (pare-brise etc) notamment en émail noir. On crée donc une épargne dans cette couche de masquage. Une autre couche de masquage (émail notamment noir etc) peut être en face F3 ou F4 notamment faisant face à la couche de masquage (et même de nature identique par exemple un émail notamment noir).

Le vitrage peut donc comporter sur la face F2 une couche fonctionnelle (athermique) s'étendant sur toute ou partie du vitrage, notamment électroconductrice, éventuellement chauffante, en particulier un empilement à l'argent, ou encore de masquage, notamment un émail, qui est absorbante à une longueur d'onde de travail dans l'infrarouge dans une gamme allant de 800nm à 1800nm, en particulier entre 850nm et 1600nm et
- absente dudit premier trou traversant au moins dans la zone centrale et en bordure du premier trou traversant entre la face F2 et Fa, notamment au moyen d'une première épargne
- et absente dudit deuxième trou traversant au moins dans la zone centrale et en bordure du deuxième trou traversant entre la face F2 et Fa, notamment au moyen d'une deuxième épargne
et/ou un revêtement fonctionnel est sur la face F2, transparent à la longueur d'onde de travail, est en regard du premier trou traversant et du deuxième trou traversant et même entre premier et deuxième trous traversant, notamment antireflet, étant éventuellement en contact de ladite couche fonctionnelle, notamment sur ou sous la couche fonctionnelle.

La couche fonctionnelle peut alors présenter une première épargne au droit dudit premier trou traversant (au moins dans la zone centrale) et de préférence qui dépasse d'au plus 50mm, 30mm ou 20mm ou 10mm, 7mm ou 5mm dans ledit deuxième trou traversant.

La couche fonctionnelle peut alors présenter une deuxième épargne au droit dudit deuxième trou traversant (au moins dans la zone centrale) et de préférence qui dépasse d'au plus 50mm, 30mm ou 20mm ou 10mm, 7mm ou 5mm dans ledit deuxième trou traversant.

La couche fonctionnelle (contrôle solaire et/ou chauffante) peut comporter un empilement de couches minces comprenant au moins une couche fonctionnelle métallique comme d'argent (en F2 ou de préférence F3), La ou chaque couche fonctionnelle (argent) est disposée entre des couches diélectriques.

Les couches fonctionnelles contiennent de préférence au moins un métal, par exemple, l'argent, l'or, le cuivre, le nickel et le chrome ou, ou d'un alliage métallique. Les couches fonctionnelles en particulier contiennent de préférence au moins 90% en poids .- du métal, en particulier au moins 99,9% en poids .- du métal. Les couches fonctionnelles peuvent être faits de métal pour l'alliage métallique. Les couches fonctionnelles contiennent de façon particulièrement préférée d'argent ou d'un alliage contenant de l'argent. L'épaisseur d'une couche fonctionnelle (argent etc) est de préférence de 5 nm à 50 nm, plus préférentiellement de 8 nm à 25 nm. Une couche diélectrique contient au moins une couche individuelle faite d'un matériau diélectrique, par exemple, contenant un nitrure tel que le nitrure de silicium ou d'un oxyde tel que l'oxyde d'aluminium. La couche diélectrique peut cependant contenir aussi une pluralité de couches individuelles, par exemple, des couches individuelles d'un matériau diélectrique, des couches, des couches de lissage, qui correspond à des couches de blocage et / ou des couches antireflet. L'épaisseur d'une couche diélectrique est, par exemple, de 10 nm à 200 nm. Cette structure de couche est généralement obtenue par une succession d'opérations de dépôt qui sont effectuées par un procédé sous vide tel que la pulvérisation cathodique magnétique supporté sur le terrain.

La couche électroconductrice est une couche (monocouche ou multicouches donc empilement) de préférence d'une épaisseur totale inférieure ou égale à 2µm, de manière particulièrement préférée inférieur ou égale 1µm.

Afin de limiter l'échauffement dans l'habitacle ou de limiter l'usage d'air conditionné, l'une des feuilles de verre au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4.

La couche TCO (pour « transparent conductive oxide » en anglais ou oxyde transparent électro-conducteur en français) est de préférence une couche d'oxyde d'étain dopé au fluor (SnO₂:F) ou une couche d'oxyde mixte d'étain et d'indium (ITO).

Cette couche est si nécessaire absente dudit premier trou traversant au moins dans la zone centrale dudit premier trou traversant et présente en bordure du premier trou traversant entre la face F2 et Fa, et absente dudit deuxième trou traversant au moins dans la zone centrale dudit premier trou traversant et présente en bordure du deuxième trou traversant entre la face F2 et Fa

Naturellement l'application la plus recherchée est que le vitrage soit un pare-brise d'un véhicule routier (automobile) ou même ferroviaire (à vitesse modérée).

Pour le verre de la première feuille de verre et/ou de la deuxième feuille de verre, il s'agit de préférence d'un verre du type silico-sodo-calcique.

Le verre intérieur et/ou extérieur peut avoir subi un traitement chimique ou thermique du type durcissement, recuit ou une trempe (pour une meilleure résistance mécanique notamment) ou être semi trempé.

Le verre de la première feuille de verre et/ou de la deuxième feuille de verre est de préférence du type flotté, c'est-à-dire susceptible d'avoir été obtenu par un procédé consistant à déverser le verre fondu sur un bain d'étain en fusion (bain « float »). On entend par faces « atmosphère » et « étain », les faces ayant été respectivement en contact avec l'atmosphère régnant dans le bain float et en contact avec l'étain fondu. La face étain contient une faible quantité superficielle d'étain ayant diffusé dans la structure du verre.

La face F2 avec un revêtement (antireflet) peut aussi bien être la face « étain » la face « atmosphère ».

Par ailleurs, pour quantifier la transmission du verre dans le domaine du visible, on définit souvent un facteur de transmission lumineuse, appelée transmission lumineuse, souvent abrégée « T_{L} », calculé entre 380 et 780 nm et ramené à une épaisseur de verre de 3,2mm ou 4mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527.

Naturellement la transmission lumineuse T_{L} du vitrage feuilleté dans une zone sans trou (zone centrale du pare-brise) est de préférence d'au moins 70% ou 75%, 80% ou 85%, 88%.

La deuxième feuille de verre est notamment verte, bleue, grise. La deuxième feuille de verre peut être verte par le Fe₂O₃ ou encore bleue avec CoO et Se ou grise avec Se et CoO.

On peut citer notamment les verres de la Demanderesse dénommés TSAnx (0,5 à 0,6% de fer) TSA2+, TSA3+(0,8 à 0,9% de fer),TSA4+(1% de fer),TSA5+, par exemple verts. Le TSA3+ (2,1mm) a par exemple une transmission totale à 905mm d'environ 40% et à 1550mm d'environ 50%.

La deuxième feuille de verre peut présenter un rédox étant défini comme étant le rapport entre la teneur pondérale en FeO (fer ferreux) et la teneur pondérale en oxyde de fer total (exprimé sous la forme Fe₂O₃) entre 0,22 et 0,35 ou 0,30.

Ladite deuxième feuille de verre peut avoir une composition chimique qui comprend les constituants suivants en une teneur variant dans les limites pondérales ci-après définies :

| | |
|---|---|
| SiO₂ | 64 - 75 % |
| Al₂O₃ | 0 - 5 % |
| B₂O₃ | 0 - 5 %, |
| CaO | 2 - 15 % |
| MgO | 0 - 5 % |
| Na₂O | 9 - 18 % |
| K₂O | 0 - 5 % |
| SO₃ | 0,1 - 0,35% |
| Fe₂O₃ (fer total) | au moins 0,4% et même 0,4 à 1,5%, |
| Eventuellement Rédox | 0,22 - 0,3 |

Et notamment moins de 0,1% d'impuretés.

La première feuille de verre peut être par exemple un verre silico-sodo-calcique comme le verre Diamant^{®} de Saint-Gobain Glass, ou Optiwhite^{®} de Pilkington, ou B270^{®} de Schott, ou Sunmax^{®} d'AGC ou d'autre composition décrite dans le document WO04/025334. On peut aussi choisir le verre Planiclear^{®} de la société Saint-Gobain Glass

Le vitrage selon l'invention, en particulier pour voiture individuelle (parebrise etc) ou camion, peut être courbé (bombé) suivant one ou plus directions notamment avec un rayon de courbure de 10cm à 40cmm. Il peut être plan pour les bus, trains, tracteurs. Avec les matières premières naturelles ordinaires, la teneur pondérale totale en oxyde de fer est de l'ordre de 0,1% (1000 ppm). Pour abaisser la teneur en oxyde de fer, on peut choisir des matières premières particulièrement pures.

Dans la présente invention, la teneur en Fe₂O₃ (fer total) de la première feuille de verre est de préférence inférieure à 0,015%, voire inférieure ou égale à 0,012%, notamment 0,010%, afin d'augmenter la transmission proche infrarouge du verre. La teneur en Fe₂O₃ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en ferferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuis correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention (première et deuxième feuille), la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

Ladite première feuille de verre peut avoir une composition chimique qui comprend les constituants suivants en une teneur variant dans les limites pondérales ci-après définies :

| | |
|---|---|
| SiO₂ | 60 - 75 % |
| Al₂O₃ | 0 - 10% |
| B₂O₃ | 0 - 5 %, de préférence 0 |
| CaO | 5 - 15% |
| MgO | 0 - 10% |
| Na₂O | 5 - 20 % |
| K₂O | 0 - 10% |
| BaO | 0 - 5 %, de préférence 0, |
| SO₃ | 0,1 - 0,4% |
| Fe₂O₃ (fer total) | 0 à 0,015%, |
| et Rédox | 0,1 - 0,3. |

Dans l'ensemble du texte, les pourcentages sont des pourcentages pondéraux.

Les feuilles de verre sont de préférence formées par flottage sur un bain d'étain. D'autres types de procédé de formage peuvent être employés, tels que les procédés d'étirage, procédé « down-draw » (procédé d'étirage par le bas), procédé de laminage, procédé Fourcault...

La composition de verre de la première feuille de verre peut comprendre, outre les impuretés inévitables contenues notamment dans les matières premières, une faible proportion (jusqu'à 1 %) d'autres constituants, par exemple des agents aidant à la fusion ou l'affinage du verre (CI...), ou encore des éléments provenant de la dissolution des réfractaires servant à la construction des fours (par exemple ZrO₂). Pour les raisons déjà évoquées, la composition selon l'invention ne comprend de préférence pas d'oxydes tels que Sb₂O₃, As₂O₃ ou CeO₂.

La composition de la première feuille de verre ne comprend de préférence aucun agent absorbant les infrarouges (notamment pour une longueur d'ondes comprise entre 800 et 1800nm). En particulier, la composition selon l'invention ne contient de préférence aucun des agents suivants : les oxydes d'éléments de transition tels que CoO, CuO, Cr₂O₃, NiO, MnO₂, V₂O₅, les oxydes de terres rares tels que CeO₂, La₂O₃, Nd₂O₃, Er₂O₃, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre présente une composition chimique qui comprend les constituants suivants en une teneur variant dans les limites pondérales ci-après définies :

| | |
|---|---|
| SiO₂ | 60 - 75 % |
| Al₂O₃ | 0 - 10% |
| B₂O₃ | 0 - 5 %, de préférence 0 |
| CaO | 5 - 15% |
| MgO | 0 - 10% |
| Na₂O | 5 - 20 % |
| K₂O | 0 - 10% |
| BaO | 0 - 5 %, de préférence 0, |
| SO₃ | > 0,2 - 0,4% |
| Fe₂O₃ (fer total) | 0 à 0,015%, |
| Et Rédox | 0,2 - 0,30. |

La première feuille de verre peut présenter une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,02%, |
| Et Rédox | 0,15 - 0,3. |

Dans la présente invention, la teneur en Fe₂O₃ (fer total) est de préférence inférieure à 0,015%, voire inférieure ou égale à 0,012%, notamment 0,010%, ce afin d'augmenter la transmission proche infrarouge du verre. La teneur en Fe₂O₃ est de préférence supérieure ou égale à 0,005%, notamment 0,008% pour ne pas trop pénaliser le coût du verre.

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention, la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

D'autres compositions préférées selon l'invention sont reproduites ci-après :

| | |
|---|---|
| SiO₂ | 65 - 75 % |
| Al₂O₃ | 0 - 3 % |
| CaO | 7 - 12% |
| MgO | 2 - 5 % |
| Na₂O | 10 - 15% |
| K₂O | 0 - 5 % |
| SO₃ | 0,1 - 0,3% |
| Fe₂O₃ (fer total) | 0 à moins de 0,015%, |
| Et Rédox | 0,1 - 0,3. |

D'autres compositions préférées selon l'invention sont reproduites ci-après :

| | |
|---|---|
| SiO₂ | 65 - 75 % |
| Al₂O₃ | 0 - 5 % |
| CaO | 7 - 12 % |
| MgO | 1 - 5 % |
| Na₂O | 10 - 15 % |
| K₂O | 0 - 5 % |
| SO₃ | 0,2 - 0,4% |
| Fe₂O₃ (fer total) | 0 à moins de 0,015%, |
| Et Rédox | 0,1 - 0,3. |

L'invention se rapporte également à un dispositif qui comprend :
- le vitrage tel que décrit précédemment
- un système de vision infrarouge à une longueur d'onde de travail dans l'infrarouge dans une gamme allant de 800nm à 1800nm, en particulier entre 850nm et 1600nm, (voire multi spectral, dans le visible, notamment entre 500 et 600nm), disposé dans l'habitacle derrière ledit vitrage et comportant un émetteur de façon à envoyer un rayonnement traversant la première feuille de verre au niveau du deuxième trou traversant et un récepteur de façon à recevoir un rayonnement après traversée de la première feuille de verre au niveau du premier trou traversant.

Certains modes de réalisations avantageux mais non limitatif de la présente invention sont décrits ci-après, qui peuvent bien entendu combinés entres eux le cas échéant. Les vues ne sont pas à l'échelle.

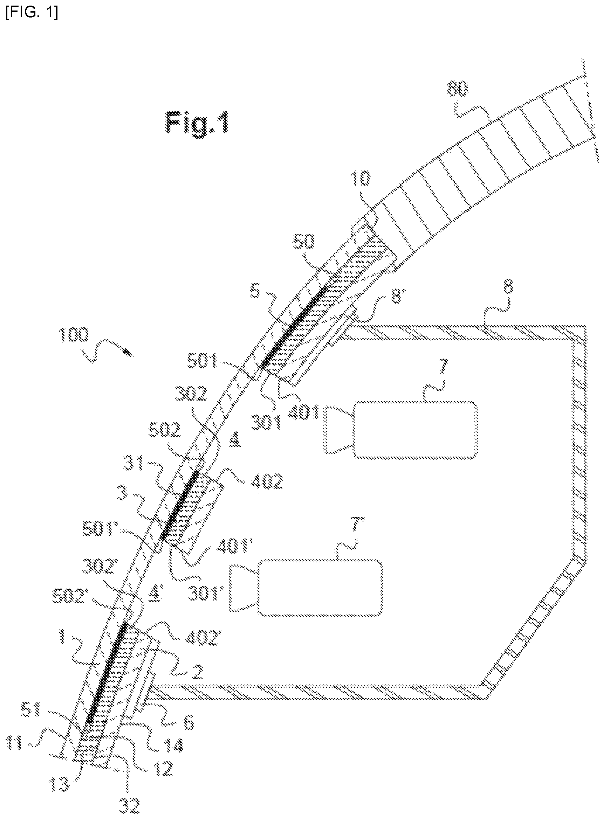

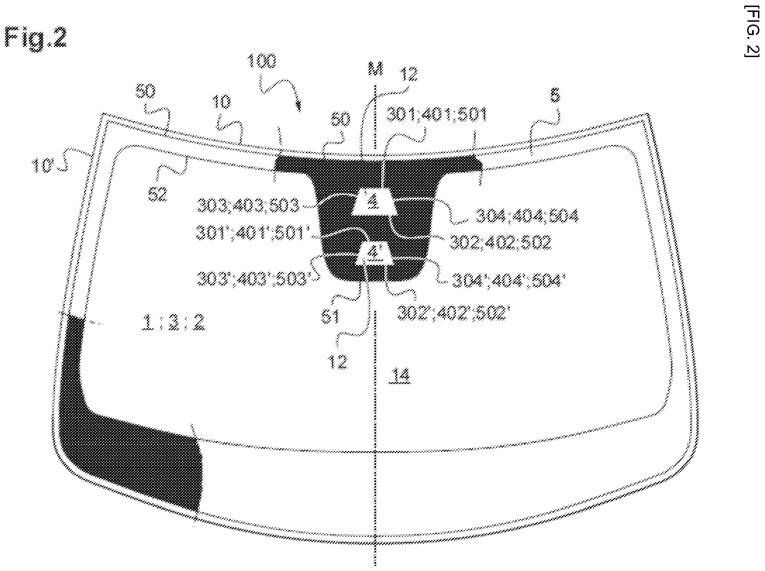

La figure 1 schématise en vue de coupe un pare-brise 100 dans un premier mode de réalisation de l'invention avec un système de vision infrarouge tel qu'un LIDAR. La figure 2 schématise en vue de face (côté habitacle) le pare-brise 100 de la figure 1.

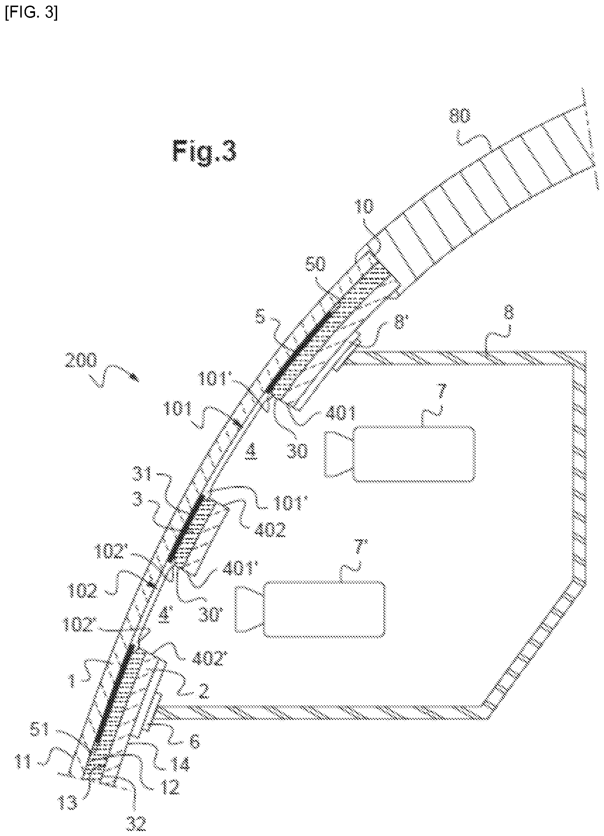

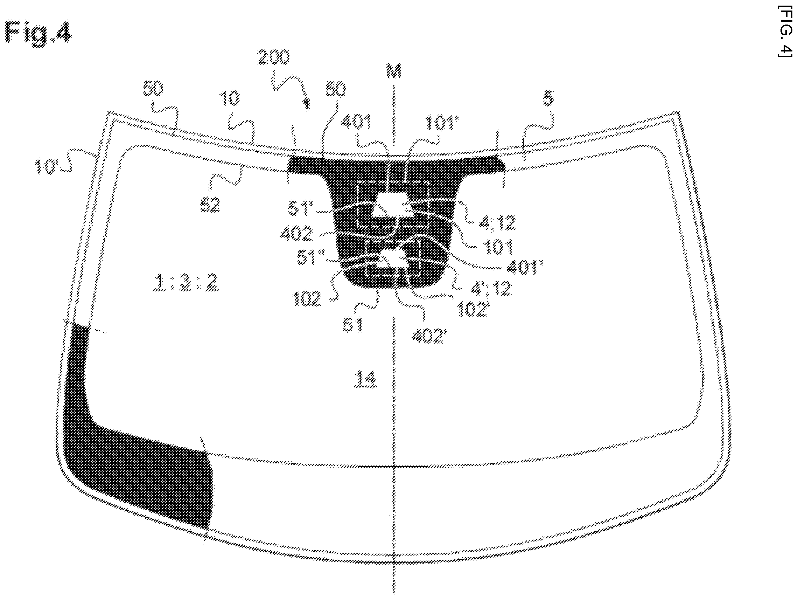

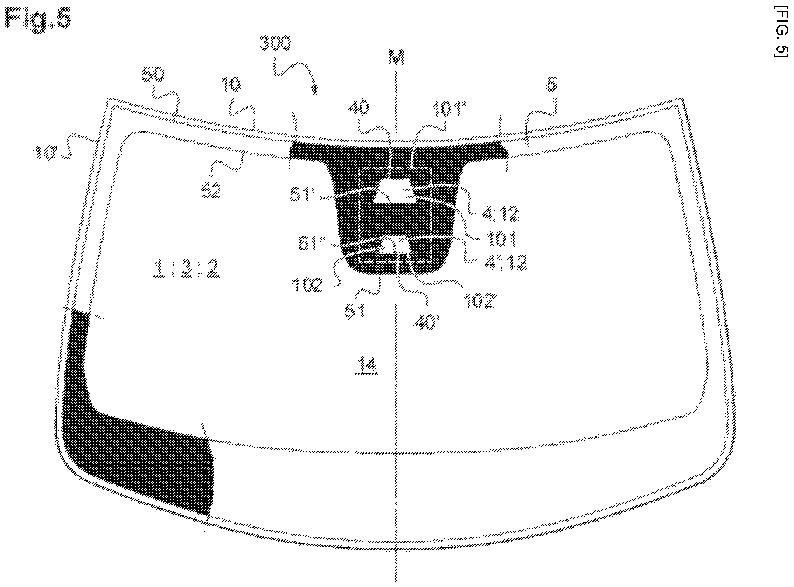

La figure 3 schématise en vue de coupe un pare-brise 200 selon l'invention avec un système de vision infrarouge tel qu'un LIDAR dans un deuxième mode de réalisation de l'invention. La figure 4 schématise en vue de face (côté habitacle) le pare-brise 200 de la figure 3. La figure 5 schématise en vue de face (côté habitacle) un pare-brise 300 dans un troisième mode de réalisation qui est une variante du précédent.

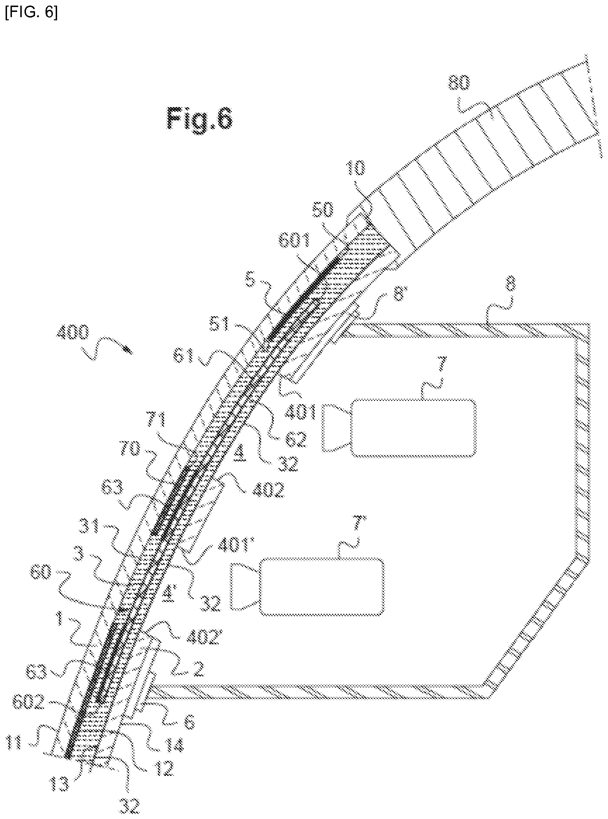

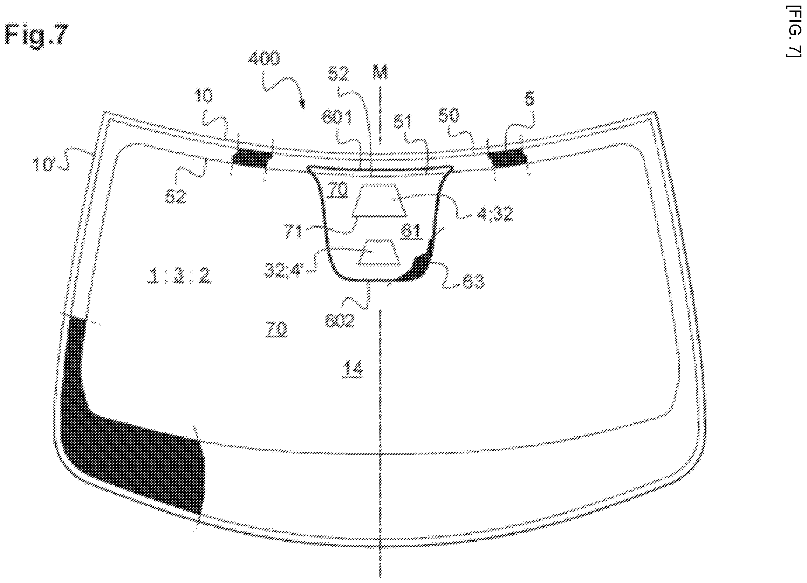

La figure 6 schématise en vue de coupe un pare-brise 400 selon l'invention avec un système de vision infrarouge tel qu'un LIDAR dans un quatrième mode de réalisation de l'invention. La figure 7 schématise en vue de face (côté habitacle) le pare-brise 400 de la figure 6.

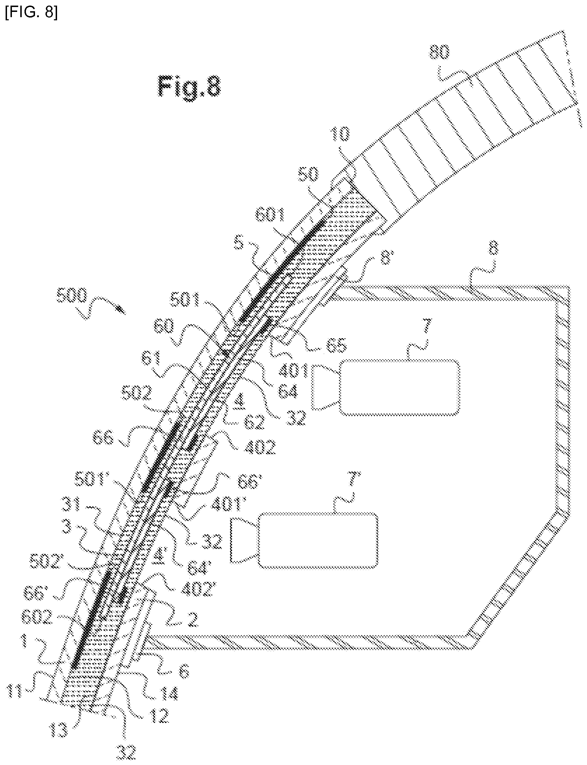

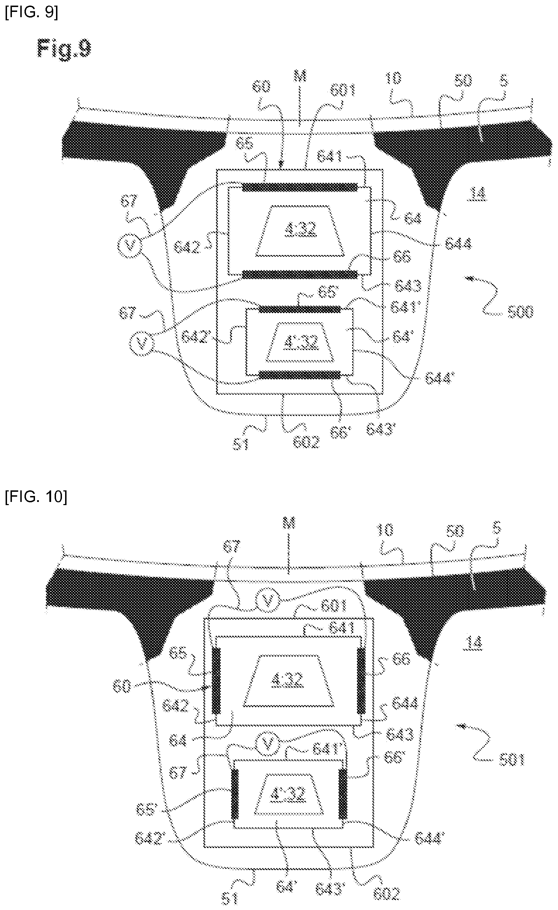

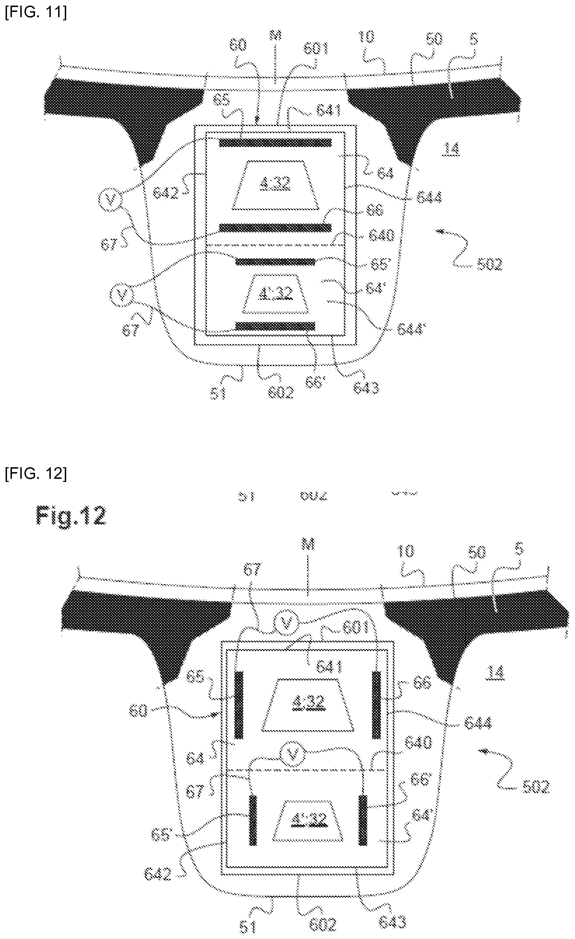

La figure 8 schématise en vue de coupe un pare-brise 500 selon l'invention, avec un système de vision infrarouge tel qu'un LIDAR dans un cinquième mode de réalisation de l'invention. La figure 9 schématise en vue de face (côté habitacle) le pare-brise de la figure 8. La figure 10 schématise en vue de face (côté habitacle) le pare-brise en première variante de la figure 8. La figure 11 schématise en vue de face (côté habitacle) le pare-brise en deuxième variante de la figure 8. La figure 12 schématise en vue de face (côté habitacle) le pare-brise en troisième variante de la figure 8.

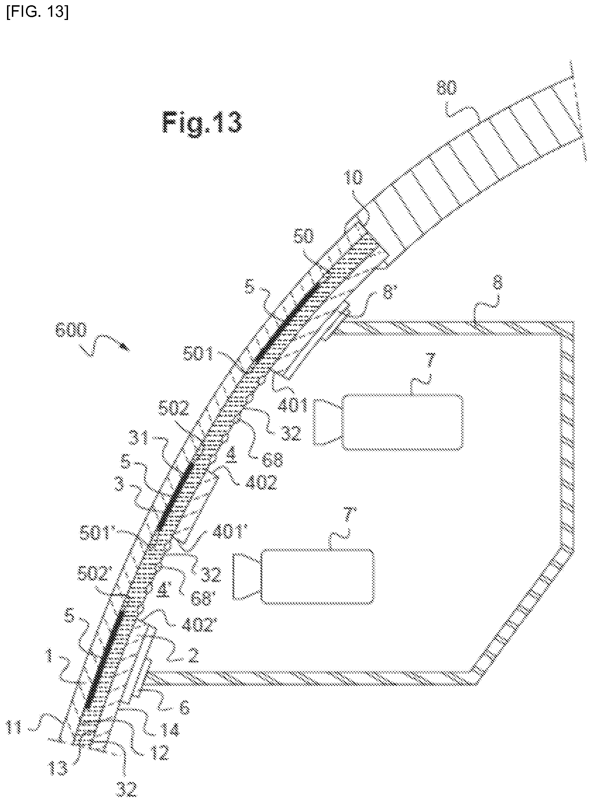

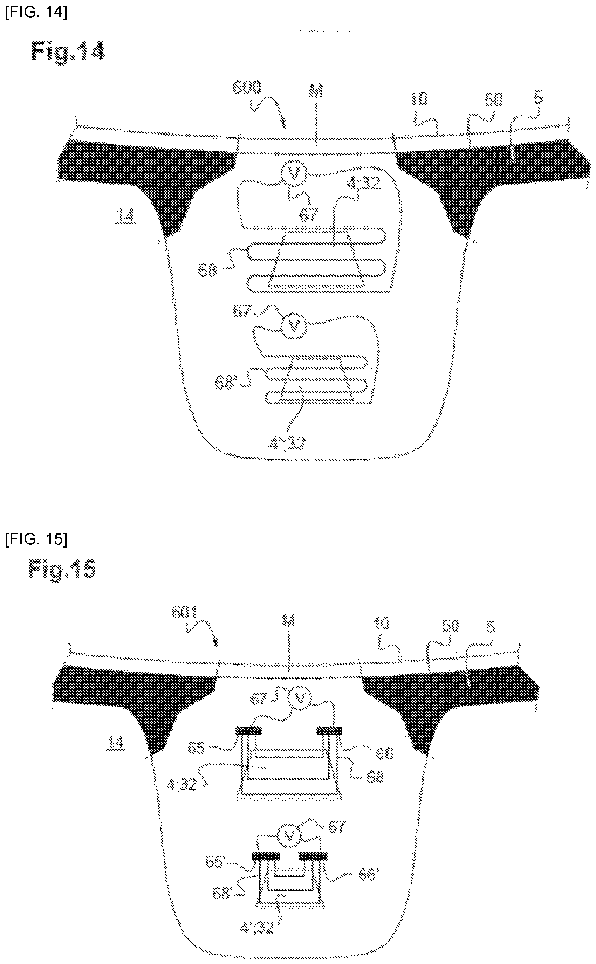

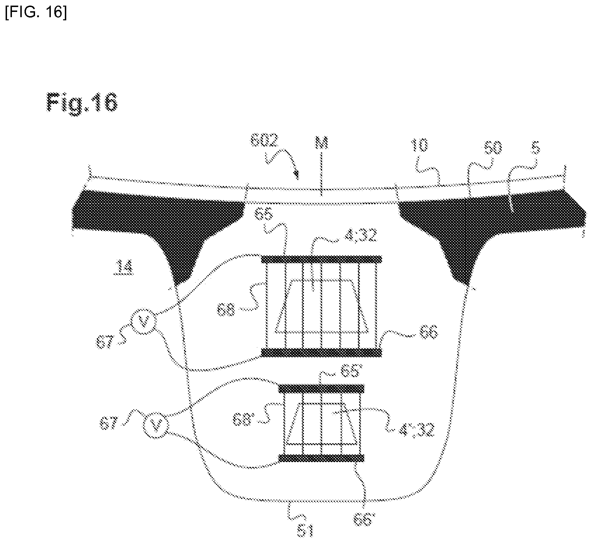

La figure 13 schématise en vue de coupe un pare-brise 600 selon l'invention, avec un système de vision infrarouge tel qu'un LIDAR dans un sixième mode de réalisation de l'invention. La figure 14 schématise en vue de face (côté habitacle) le pare-brise 600 de la figure 13. La figure 15 schématise en vue de face (côté habitacle) le pare-brise 601 dans une variante de la figure 13. La figure 16 schématise en vue de face (côté habitacle) le pare-brise 602 dans une variante de la figure 13.

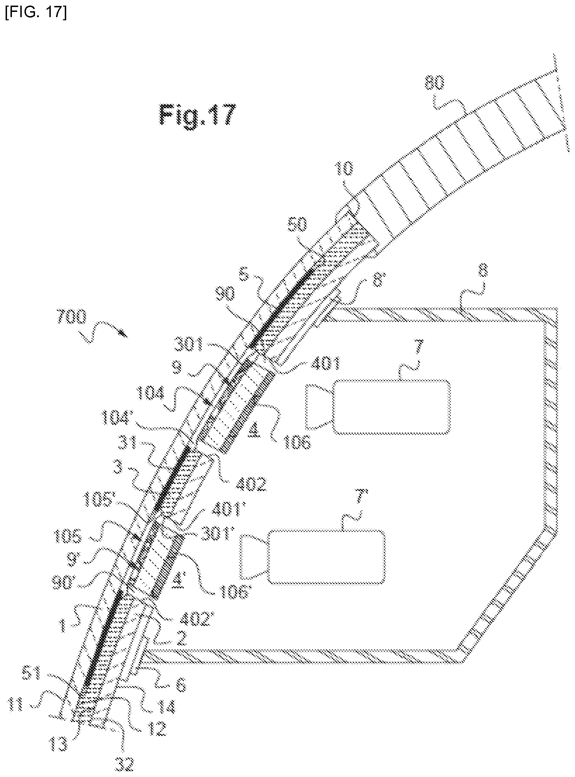

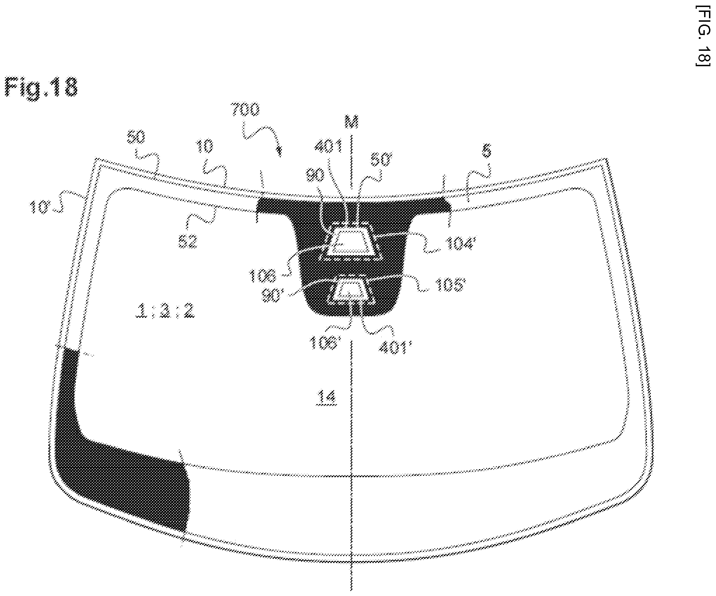

La figure 17 schématise en vue de coupe un pare-brise 700 selon l'invention, avec un système de vision infrarouge tel qu'un LIDAR dans un septième mode de réalisation de l'invention. La figure 18 schématise en vue de face (côté habitacle) le pare-brise 700 de la figure précédente.

La figure 1 schématise un pare-brise de véhicule notamment automobile 100 selon l'invention, avec un système de vision infrarouge tel qu'un LIDAR à 905nm ou 1550nm comportant un récepteur 7 et un émetteur 7'.

Ce système de vision est placé derrière le pare-brise face à une zone qui se situe de préférence dans la partie centrale et supérieure du pare-brise. Dans cette zone, le système de vision infrarouge est orienté avec un certain angle vis-à-vis de la surface du pare-brise (face F2 14). En particulier, l'émetteur 7' et le récepteur 7 peuvent être orientés directement vers la zone de saisie d'images, selon une direction proche de la parallèle au sol, c'est-à-dire légèrement inclinée vers la route. Autrement dit, l'émetteur 7' et le récepteur 7 du LIDAR peuvent être orientés vers la route selon un angle faible avec un champ de vision adapté pour remplir leurs fonctions. Le récepteur 7 est placé au-dessus de l'émetteur 7' (donc récepteur 7 plus éloigné du sol).

Le pare-brise 100 est un vitrage feuilleté bombé comprenant :
- une feuille de verre externe 1, avec face extérieure F1 et face intérieure F2
- et une feuille de verre interne 2, par exemple d'épaisseur ou même de 1,6mm ou même moins, avec face extérieure F3 et face intérieure F4 côté habitacle
- les deux feuilles de verre étant liées l'une à l'autre par un intercalaire en matière thermoplastique 3 (mono ou multifeuillet), le plus souvent en polyvinylbutyral (PVB de préférence avec plastifiants) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en trois feuillets PVB, PVB avec une face principale interne 31 et une face principale 32.

Le pare-brise de véhicule routier en particulier est bombé.

De façon classique et bien connue, le pare-brise est obtenu par feuilletage à chaud des éléments 1, 2 et 3. On choisit par exemple un PVB clair de 0,76mm.

La première feuille de verre 1 notamment à base de silice, sodocalcique, silicosodo calcique (de préférence), aluminosilicate, borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%. La première feuille de verre peut présenter un rédox supérieur ou égal à 0,15, et notamment compris entre 0,2 et 0,30, notamment entre 0,25 et 0,30. On choisit notamment un verre OPTWHITE et de 1,95mm d'épaisseur.

La deuxième feuille de verre 2 notamment à base de silice, sodocalcique, de préférence silicosodo calcique (et comme la première feuille de verre), voire aluminosilicate, ou borosilicate présente une teneur pondérale en oxyde de fer total d'au moins 0,4% et de préférence d'au plus 1,5%.

On peut citer notamment les verres de la Demanderesse dénommés TSAnx (0,5 à 0,6% de fer) TSA2+, TSA3+(0,8 à 0,9% de fer), SA4+(1% de fer), TSA5+, par exemple verts. On choisit par exemple un verre TSA3+ de 1,6mm d'épaisseur.

Selon l'invention, dans une région centrale périphérique le long du bord longitudinal supérieur 10, le pare-brise 100 comporte :
- un premier trou traversant 4, ici fermé, de la deuxième feuille de verre 2, premier trou 4 donc délimité par une paroi du verre 401 à 404
- et même éventuellement un premier trou traversant fermé d'intercalaire dans l'épaisseur de l'intercalaire de feuilletage 3 délimité par une paroi d'intercalaire 301 à 304,
- sous le premier trou traversant, un deuxième trou traversant 4' fermé de la deuxième feuille de verre 2, deuxième trou 4' donc délimité par une paroi du verre 401' à 404'
- et même éventuellement un deuxième trou traversant fermé d'intercalaire dans l'épaisseur de l'intercalaire de feuilletage 3 délimité par une paroi d'intercalaire 301' à 304'.

En variante l'un ou chaque trou d'intercalaire peut être partiel.

On définit une ligne centrale M passant par le milieu du bord supérieur qui peut être un axe de symétrie du vitrage.

Les deux trous traversants verticaux 4, 4' peuvent être centraux ainsi la ligne M passe divise chaque trou traversant en deux parties identiques.

Comme montré en figures 1 et 2 (vue de coupe suivant M), le premier trou traversant est ici trou fermé (entouré par la paroi de la feuille de verre), donc au sein du vitrage notamment -de section trapézoïdale -comportant :
- un premier grand côté 401 ou bord longitudinal dit supérieur le plus proche de la tranche du bord longitudinal supérieur du vitrage 10-parallèle à cette tranche de longueur d'au plus 20cm par exemple 8cm et espacé d'au moins 5cm ou 6cm de la tranche (du grand côté)
- un deuxième grand côté 402 ou bord longitudinal dit inférieur (le plus éloigné de la tranche du bord longitudinal supérieur 10, proche de la zone centrale) parallèle au premier grand côté de longueur d'au plus 25cm ou 20cm et de préférence plus grande que celle du premier grand côté par exemple 14cm,
- des premiers et deuxième petits côtés 403, 404, ou bords latéraux obliques.

La hauteur (entre les grands côtés) est d'au moins 5cm ici de 6cm.

Le deuxième trou 4' est ici trou fermé (entouré par la paroi de la feuille de verre), donc au sein du vitrage notamment -de section trapézoïdale -
- un premier grand côté ou bord longitudinal dit supérieur 401' le plus proche de la tranche du bord longitudinal supérieur du vitrage 10 - parallèle à cette tranche de longueur d'au plus 20cm par exemple 6cm
- un deuxième grand côté ou bord longitudinal dit inférieur 402' (le plus éloigné de la tranche du bord longitudinal supérieur 10, proche de la zone centrale) parallèle au premier grand côté 402 de longueur d'au plus 25cm ou 20cm et de préférence plus grande que celle du premier grand côté 401' par exemple 15cm
- de hauteur (entre les grands côtés) d'au moins 5cm ici de 6cm.

Le deuxième trou 4' est distant d'au moins 8cm ici de 15cm du premier trou 4.

Le récepteur 7 est en vis-à-vis du premier trou traversant 4 (trou supérieur). L'émetteur 7' est en vis-à-vis du deuxième trou traversant 4 (trou inférieur).

Le premier trou traversant 4 (et même le deuxième trou traversant 4' bien que l'on préfère un trou fermé) peut être alternativement une encoche donc un trou traversant débouchant de préférence côté toit (sur le bord longitudinal supérieur 10).

Les trous traversants 4 et 4' peuvent être dans une autre région du pare-brise 100 ou même dans un autre vitrage du véhicule en particulier la lunette arrière.

Le premier trou d'intercalaire peut être de préférence de taille identique ou plus large que le premier trou 4' du verre interne.

Le premier trou d'intercalaire est ici de même forme trapézoïdale que le premier trou 4 avec deux grands côtés 301, 302 et deux petits côtés 303, 304. Le premier trou d'intercalaire peut être de préférence de taille identique ou plus large que le premier trou 4' par exemple les parois 301 à 304 délimitant le trou d'intercalaire étant en retrait d'au plus 10mm ou 5mm des parois du verre 401 à 404 délimitant le trou 4.En variante, c'est un rectangle ou toute autre forme englobant la surface du premier trou traversant (trapézoïdale ou autre) 4.

Le deuxième trou d'intercalaire peut être de préférence de taille identique ou plus large que le deuxième trou 4' de verre.

Le deuxième trou d'intercalaire est ici de même forme trapézoïdale que le deuxième trou 4' avec deux grands côtés 301', 302' et deux petits côtés 303',304'. Le deuxième trou d'intercalaire peut être de préférence de taille identique ou plus large que le deuxième trou 4' par exemple les parois 301' à 304' délimitant le trou d'intercalaire étant en retrait d'au plus 10mm ou 5mm des parois du verre 401' à 404' délimitant le trou 4'. En variante, c'est un rectangle ou toute autre forme englobant la surface du deuxième trou traversant (trapézoïdale ou autre).

Le pare-brise 100 comporte sur la face F2 12 une couche de masquage opaque par exemple noire 5, tel qu'une couche d'émail ou une laque, formant un cadre périphérique du parebrise (ou de la lunette) notamment le long du bord longitudinal supérieur 10 du vitrage et notamment le long du bord latéral gauche 10' du vitrage.

Le bord externe 50 de la couche de masquage le plus proche de la tranche du vitrage peut être espacé de 1 ou 2mm à quelques cm de la tranche 10 (bord longitudinal ici supérieur).

La couche de masquage 5 présente un bord (longitudinal) interne 51 dans la zone centrale du parebrise et un bord (longitudinal) interne 52 de part et d'autre. La couche 5 a ici une largeur supérieure dans la zone centrale que dans les autres zones périphériques, de part et d'autre.

Cette zone centrale étant dotée des trous 4, 4', cette couche de masquage 5 comporte :
- au droit du premier trou 4, une première épargne suffisamment grande pour ne pas gêner les performances du récepteur 7, notamment légèrement inférieure au premier trou traversant 4
- au droit du deuxième trou 4', une deuxième épargne suffisamment grande pour ne pas gêner les performances 7 de l'émetteur 7', notamment légèrement inférieure au deuxième trou traversant 4'.

La première épargne est ici de même forme trapézoïdale que le premier trou 4 avec deux grands côtés 501, 502 et deux petits côtés 503, 504. La première épargne peut être de préférence de taille identique ou inférieure au premier trou 4 par exemple les parois 501 à 504 délimitant la première épargne dépassant d'au plus 50mm ou 10mm ou même 5mm des parois du verre 401 à 404 délimitant le premier trou 4. En variante, c'est un rectangle ou toute autre forme notamment inscrite dans la surface du premier trou traversant (trapézoïdale ou autre).

La deuxième épargne est ici de même forme trapézoïdale que le premier trou 4 avec deux grands côtés 501', 502' et deux petits côtés 503', 504'. La deuxième épargne peut être de préférence de taille identique ou inférieure au deuxième trou 4' par exemple les parois 501' à 504' délimitant la deuxième épargne dépassant d'au plus 50mm ou 10mm ou même 5mm des parois du verre 401' à 404' délimitant le deuxième trou 4'. En variante, c'est un rectangle ou toute autre forme notamment inscrite dans la surface du deuxième trou traversant (trapézoïdale ou autre).

La couche de masquage 5 est apte à masquer le boîtier 8 (plastique, métal etc) du LIDAR 7, 7'. Le boitier 8 peut être collé à la face F4 14 par une colle 6 et au toit 80.

Le pare-brise 100 peut comporter un ensemble de fils métalliques quasi invisibles, par exemple de 50µm qui sont mis en place dans ou sur une face de l'intercalaire de feuilletage 3 (sur toute la surface), par exemple la face Fb 32 côté face F3, en forme des lignes droites ou non. Ces fils métalliques quasi invisibles sont absents au droit des trous traversants 4, 4'.

Un premier insert (non représenté) creux de type bague de largeur d'au plus 1,5cm par exemple en matière souple, polymère (polycarbonate etc) peut être logé monté sur (notamment collé ou en force)
- sur la paroi du trou de l'intercalaire de feuilletage, il peut servir de barrière au fluage et être masqué par la couche de masquage
- et/ou sur la paroi 40 de la deuxième feuille de verre délimitant (en partie haute) le premier trou traversant, pour servir de renfort mécanique, et/ou pour la fixation du LIDAR, cet insert pouvant s'étendre au-delà du premier trou, notamment sur la face F4.

La figure 3 schématise en vue de coupe un pare-brise 200 avec un système de vision infrarouge tel qu'un LIDAR dans un deuxième mode de réalisation de l'invention. La figure 4 schématise en vue de face (côté habitacle) le pare-brise 200 de la figure 3.

Seules les différences avec le premier mode sont explicitées ci-après.

La première-feuille de verre comporte, sur la face F2, un revêtement antireflet 2, à au moins une longueur d'onde dite de travail dans l'infrarouge comprise entre 800nm à 1800nm, notamment entre 850nm et 1600nm avec
- une première zone 101 avec une première surface libre (non recouverte par l'intercalaire de feuilletage 3 et la deuxième feuille de verre 2) en vis-à-vis du trou total formé par le trou traversant d'intercalaire dans l'épaisseur de l'intercalaire et ledit premier trou traversant 4, zone de bord ou contour 101'
- une deuxième zone 102 avec une deuxième surface libre 1 (non recouverte par l'intercalaire de feuilletage 3 et la deuxième feuille de verre 2) en vis-à-vis du trou total formé par le trou traversant d'intercalaire dans l'épaisseur de l'intercalaire et ledit deuxième trou traversant 4, zone de bord ou contour 102'.

Le revêtement antireflet 101,102 est local et ici divisée en deux couches disjointes par exemple espacée d'au moins 1cm, de 5cm. Chaque zone de la couche antireflet 101,102 est de forme rectangulaire dans cette région périphérique (en pointillés sur la figure 4 car non visibles) et le bord 20 dépassent éventuellement entre la face 12 et la face Fa 31 par exemple au maximum de 10mm ou 5mm des parois délimitant le trou d'intercalaire ou le trou traversant 4. Ici, chaque zone du revêtement antireflet est sur la face F2 et recouvre un peu la couche de masquage 5 éventuelle sur la face F2.

La première zone 101 (et éventuellement respectivement la deuxième zone) du revêtement antireflet présente alternativement une autre forme par exemple forme homothétique à celle de la section du premier trou traversant ou d'intercalaire (et éventuellement respectivement du deuxième trou traversant ou d'intercalaire) donc par exemple forme trapézoïdale.

Avec un verre OPTIWHITE de 1,95mm et un revêtement antireflet de 110nm on obtient les transmission totale côté face F2 suivantes au niveau du premier et deuxième trou total:
- à 90° de 92,5% à 905nm et 92,0% à 1550nm
- à 60° de 91,7% à 905nm et 91,5% à 1550nm.

Dans une variante représentée en figure 5, le parebrise 300 présente un revêtement antireflet de surface rectangulaire englobant les première et deuxièmes zones antireflet 101,102 et est présent entre les deux trous 4 et 4'.

Des variantes possibles sont les suivantes (sans être exhaustives) éventuellement cumulables :
- le revêtement antireflet ne dépasse pas du premier trou traversant (ni du deuxième trou traversant) et même est espacé du bord du premier trou traversant (et du deuxième trou traversant) de préférence d'au plus 1cm ou 5mm
- le revêtement antireflet est espacé de la couche de masquage (par exemple qui est en face F2 notamment de l'émail) ou au moins ne la recouvre pas.
- le revêtement antireflet comporte une sous couche de protection chimique notamment une couche de silice dense, notamment par sol-gel, surmonté de la couche fonctionnelle de silice (nano)poreuse sol gel.
- la face F2 comporte une couche fonctionnelle (athermique etc) sous ou sur l'émail, revêtement antireflet étant éventuellement en contact de la couche fonctionnelle notamment sur ou sous la couche fonctionnelle (athermique etc).

La figure 6 schématise en vue de coupe un pare-brise 400 selon l'invention avec un système de vision infrarouge tel qu'un LIDAR dans un quatrième mode de réalisation de l'invention. La figure 7 schématise en vue de face (côté habitacle) le pare-brise 400 de la figure 6.

Seules les différences avec le premier mode sont explicitées ci-après.

L'intercalaire de feuilletage 3 par exemple en deux feuillets de PVB ne comporte pas de trou (ou en variante un trou partiel par exemple dans un deuxième feuillet intercalaire orienté vers la face F3, avec la face Fb 32). Aussi au droit des premier et deuxième trous traversants 4, 4' la surface 32 peut être libre.

La couche de masquage opaque 5 n'est pas élargie dans la zone centrale (passant par M). Un élément fonctionnel de masquage 60 vient compléter le masquage (pour l'extérieur) dans cette zone centrale et est disposé au sein de l'intercalaire de feuilletage 3. Il présente un bord supérieur 601 sous la zone émail 5 et un bord inférieur 602 vers le centre du pare-brise. L'élément fonctionnel de masquage 60 comporte une feuille ou support notamment polymère par exemple PET de 100µm, transparente à la longueur d'onde de travail du LIDAR avec une première face principale côté face F2 61 et avec une deuxième face principale côté face F3 62.

La première face 61 (alternativement la deuxième face principale 62) est porteuse d'un revêtement opaque 63 en pleine couche pourvu d'une première épargne trapézoïdale (en variante rectangulaire ou toute autre forme) au droit du premier trou traversant 4 et pourvu d'une deuxième épargne trapézoïdale (en variante rectangulaire ou toute autre forme) au droit du deuxième trou traversant 4'.

De manière optionnelle, la face F2 est couverte par une couche électroconductrice athermique 70 (contrôle solaire, chauffante etc) pourvu d'une première épargne trapézoïdale (en variante rectangulaire ou toute autre forme) au droit du premier trou traversant 4 et pourvu d'une deuxième épargne trapézoïdale (en variante rectangulaire ou toute autre forme) au droit du deuxième trou traversant 4'.

L'insert opaque 60 peut être porteur de capteur (antenne etc), d'écran luminescent notamment sur la face 62 coté F3. L'insert opaque 60 peut comporter d'autres épargnes pour ces capteurs.

La figure 8 schématise en vue de coupe un pare-brise 500 selon l'invention, avec un système de vision infrarouge tel qu'un LIDAR dans un cinquième mode de réalisation de l'invention. La figure 9 schématise en vue de face (côté habitacle) le pare-brise 500 de la figure 8. La figure 10 schématise en vue de face (côté habitacle) le pare-brise 501 en première variante de la figure 8. La figure 11 schématise en vue de face (côté habitacle) le pare-brise 502 en deuxième variante de la figure 8. La figure 12 schématise en vue de face (côté habitacle) le pare-brise 502 en troisième variante de la figure 8.

Seules les différences avec le premier mode sont explicitées ci-après.

L'intercalaire de feuilletage 3 par exemple en deux feuillets de PVB ne comporte pas de trou (ou en variante un trou partiel par exemple dans un deuxième feuillet intercalaire orienté vers la face F3, avec la face Fb 32). Aussi au droit des premier et deuxième trous traversants 4, 4' la surface 32 peut être libre.

Un élément fonctionnel chauffant 60 est disposé au sein de l'intercalaire de feuilletage. Il présente un bord supérieur 601 sous la zone émail 5 et un bord inférieur 602 vers le centre du pare-brise. Il s'étend de façon à couvrir la région des trous traversants 4, 4'.

L'élément fonctionnel chauffant 60 comporte une feuille ou support notamment polymère par exemple PET de 100µm, transparente à la longueur d'onde de travail du LIDAR avec une première face principale côté face F2 61 et avec une deuxième face principale côté face F3 62.

La deuxième face 62 (alternativement la première face principale 61) est porteuse d'un revêtement chauffant 64 en regard du premier trou traversant 4 et en regard du deuxième trou traversant 4', formant première et deuxième zones de chauffage locales. Le revêtement chauffant en matériau transparent à au moins une longueur d'onde dite de travail dans l'infrarouge dans une gamme allant de 800nm à 1800nm, en particulier entre 850nm et 1600nm.

Le revêtement est ici en des première et deuxième zones de chauffage rectangulaires disjointes 64, 64' par exemple espacées d'au moins 1cm et éventuellement de tailles distinctes (deuxième zone de chauffe plus petite). Les grands côtés 641, 643 et 641', 643' peuvent être parallèles aux grands côtés du trou traversant 4 ou 4'. Les petits côtés 642, 644, 642', 644' peuvent être parallèles aux petits côtés du trou traversant 4 ou 4'. On peut souhaiter des alimentations indépendantes.

La première zone de chauffage rectangulaires 64 est pourvue de deux amenées de courant ou premier et deuxièmes bus bars locaux (dédiés) horizontaux 65,66 décalés du premier trou traversant 4 de part et d'autre des grands côtés du premier trou traversant 4 alimentés en tension 67 par exemple par 15V ou 48V. La deuxième zone de chauffage rectangulaires 64' est pourvue de deux amenées de courant ou troisième et quatrième bus bars locaux horizontaux (dédiés) 65',66' décalés du deuxième trou traversant 4' de part et d'autre des grands côtés du deuxième trou traversant alimentés en tension 67 par exemple par 15V ou 48V.

On adapte à façon la longueur des bus bar de préférence égaux ou plus longs ou que les grands côtés des trous traversants.

Dans le cas de trous traversants ronds ou ovales les bus bars sensiblement horizontaux peuvent être courbes pour suivre la forme des trous traversants.

On souhaite rapprocher les bus bars le plus possible pour augmenter la densité de puissance. De préférence la distance entre bus bars de chaque zone est d'au plus 30mm ou 20mm.

L'insert chauffant 60 peut être porteur de capteur (antenne et) d'écran électroluminescent notamment sur la face 62 coté F3.

L'insert chauffant 60 peut servir aussi d'insert de masquage comme décrit précédemment. On adapte son étendue, l'étendue de l'émail et la couche de masquage peut être de préférence sur la face 61 ici à l'opposé de la couche chauffante ou en alternative même sur toute ou partie de la couche chauffante et des bus bars (de préférence sur la face 61).

En figure 10, les premier, deuxième, troisième quatrième bus bars sont latéraux 65, 66 et 65',66' ici verticaux mais obliques (non parallèles) par rapport aux petits côtés des trous traversants 4, 4'.

On peut préférer de bus bars latéraux verticaux ou obliques (parallèles par rapport aux petits côtés des trous traversants 4, 4') car les bus bars horizontaux peuvent générer des surépaisseurs locales favorisant les distorsions.

Les premier et troisième bus bars peuvent être alignés et les deuxième et quatrième bus bars peuvent être alignés.

Dans le cas de trous traversants ronds ou ovales les bus bars latéraux peuvent être courbes pour suivre la forme des trous.

En figure 11, variante de la figure 9, la couche chauffante 64 est rectangulaire et englobe une surface en regard des premier et deuxième trous traversants 4, 4' pour former les première et deuxième zones de chauffage locales séparées par une discontinuité 640, par exemple de largeur subcentimétrique, de la couche chauffante 64.

En figure 12, variante de la figure 10, la couche chauffante 64 est rectangulaire et englobe une surface en regard des premier et deuxième trous traversants pour former les première et deuxième zones de chauffage locales séparées par une discontinuité 640 par exemple de largeur subcentimétrique de la couche chauffante 64.

En variantes non représentées de la figure 9 on peut aussi prévoir :
- de supprimer les deux bus bars 66,65' entre les deux trous ainsi on a des premiers et deuxièmes bus bars communs 65, 66' aux première et deuxième zones de chauffage locales avec une alimentation électrique commune 67
- ou au moins de supprimer l'une des deuxième et troisième bus bars 66,65' entre les deux trous ainsi on a des premiers et deuxièmes bus bars communs 65, 66' aux première et deuxième zones de chauffage locales, et on adapte l'alimentation électrique 67.

En variante non représentée, les bus bars des première et deuxième zones de chauffage locales, sont regroupés dans une zone périphérique au premier trou traversant notamment qui est une zone supérieure située entre le bord longitudinal supérieur et le premier trou traversant et/ou qui est une zone latérale adjacente à un bord latéral du premier trou traversant (entre le bord latéral du vitrage et le trou).

La figure 13 schématise en vue de coupe un pare-brise 600 selon l'invention, avec un système de vision infrarouge tel qu'un LIDAR dans un sixième mode de réalisation de l'invention. La figure 14 schématise en vue de face (côté habitacle) le pare-brise 600 de la figure 13. La figure 15 schématise en vue de face (côté habitacle) le pare-brise 601 dans une variante de la figure 13. La figure 16 schématise en vue de face (côté habitacle) le pare-brise 602 dans une variante de la figure 13.

Seules les différences avec le premier mode sont explicitées ci-après.

L'intercalaire de feuilletage 3 par exemple en deux feuillets de PVB ne comporte pas de trou (ou en variante un trou partiel par exemple dans un deuxième feuillet intercalaire orienté vers la face F3, avec la face Fb 32). Aussi au droit des premier et deuxième trous traversants 4, 4' la surface 32 peut être libre.

La face Fb 32 comporte :
- un premier fil métallique chauffant 68, ancré à l'intercalaire de feuilletage, en regard du premier trou traversant 4, premier fil serpentant (cf figure 14),
- un deuxième fil métallique notamment chauffant 68', ici distinct audit premier fil métallique, ancré à l'intercalaire de feuilletage en regard du deuxième trou traversant 4', deuxième fil serpentant.

Chaque alimentation en tension 67 est indépendante.

Les fils 68, 68'peuvent être aussi côté face Fa ou au sein de l'intercalaire de feuilletage. Dans une variante de réalisation on utilise que le premier fil, le premier fil est en regard du premier trou traversant (en serpentant), notamment entre les premier et deuxième trous traversants et en regard du deuxième trou traversant (en serpentant). On peut adapter l'alimentation électrique en conséquence. On peut utiliser un connecteur plat dans la zone supérieure par exemple entre le premier trou et le bord longitudinal supérieur.

En figure 15, la première zone de chauffage locale comporte une pluralité de fils chauffants 67, et connectés à l'alimentation électrique par deux bus bar horizontaux adjacents 65, 66 dans la zone supérieure au-dessus du premier trou traversant ou par un connecteur plat. La deuxième zone de chauffage local comporte une pluralité de fils chauffants 67' et connectés à l'alimentation électrique par deux bus bar horizontaux adjacents 65', 66' dans la zone au-dessus du deuxième trou traversant 4' ou par un connecteur plat.

En figure 16 la première zone de chauffage locale comporte une pluralité de premiers fils chauffants 67, et connectés à l'alimentation électrique par des premier et deuxième bus bar horizontaux 65, 66 de part et d'autre du premier trou traversant 4. La deuxième zone de chauffage local comporte une pluralité de deuxièmes fils chauffants 67' et connectés à l'alimentation électrique par des troisièmes et quatrième bus bar horizontaux adjacents 65', 66' de part et d'autre du deuxième trou traversant 4'.

En variantes non représentées de la figure 9 on peut aussi prévoir :
- d'étendre les premiers fils pour être en face du deuxième trou traversant et donc de supprimer les deux bus bars 66,65' entre les deux trous ainsi on a des premiers et deuxièmes bus bars communs 65, 66' aux première et deuxième zones de chauffage locales avec une alimentation électrique commune 67
- ou d'étendre les premiers fils pour être en face du deuxième trou traversant au moins de supprimer l'une des deuxième et troisième bus bars 66,65' entre les deux trous ainsi on a des premiers et deuxièmes et troisièmes bus bars communs 65, 66' aux première et deuxième zones de chauffage locales, et on adapte l'alimentation électrique 67.

Dans une variante les bus bars ou le ou les connecteurs plats sont regroupé dans une zone périphérique au premier trou traversant notamment zone supérieure qui est située entre le bord longitudinal supérieur et le premier trou traversant et/ou zone latérale adjacente à un bord latéral du premier trou traversant.

La figure 17 schématise en vue de coupe un pare-brise 700 selon l'invention, avec un système de vision infrarouge tel qu'un LIDAR dans un septième mode de réalisation de l'invention. La figure 18 schématise en vue de face (côté habitacle) le pare-brise 700 de la figure précédente.

Seules les différences avec le premier mode sont explicitées ci-après.

A des fins de protection mécaniques, une première pièce 9, courbée, transparente à au moins une longueur d'onde de travail du LIDAR, est collée sur la face F2 12 revêtue d'une éventuelle première couche fonctionnelle (chauffante etc) 104 sous et dans le premier trou traversant 4. La première pièce est par exemple polymère ou verre extraclair.

La face externe de la première pièce 9 peut être sous ou dans le premier trou traversant 4 ou comme ici en saillie côté face habitacle. Elle comporte un revêtement antireflet 106 notamment à base de silice (nano)poreuse par exemple comme celle déjà décrite pour le deuxième mode de réalisation.

La première pièce 9 est espacée (espace 90 de 2mm) des parois 401,301 délimitant le premier trou traversant 4 et le trou d'intercalaire. En bordure 104' (dépassant de la pièce 9) la couche 104 présente donc une surface libre.

A des fins de protection mécaniques, une deuxième pièce 9', courbée, transparente à au moins une longueur d'onde de travail du LIDAR, est collée sur la face F2 12 revêtue d'une éventuelle couche fonctionnelle (chauffante etc) 105 sous et dans le deuxième trou traversant 4'. La deuxième pièce est par exemple polymère ou verre extraclair.

La face externe de la deuxième pièce 9' peut être sous ou dans le deuxième trou traversant 4' ou comme ici en saillie côté face habitacle. Elle comporte un revêtement antireflet 106' notamment à base de silice (nano)poreuse par exemple comme celle déjà décrite pour le deuxième mode de réalisation.

La deuxième pièce 9' est espacée (espace 90' de 2mm) des parois 401',301' délimitant le deuxième trou traversant 4' et le trou d'intercalaire. En bordure 105' (dépassant de la pièce 9') la couche 105 présente donc une surface libre.

## Revendications

1. Vitrage de véhicule (100 à 700), notamment routier ou ferroviaire, en particulier pare-brise, lunette arrière, en particulier bombé, d'épaisseur donnée, comportant :
- une première feuille de verre (1) destinée à être le vitrage extérieur avec une première face principale externe F1 (11) et une deuxième face principale interne F2 (12) orientée vers l'habitacle
- un intercalaire de feuilletage (3) en matière polymère avec une face principale Fa orienté vers F2 (31) et avec une face principale Fb opposée à Fa (32)
- une deuxième feuille de verre (2) destinée à être le vitrage intérieur avec une troisième face principale F3 (13) côté F2 et une quatrième face principale F4 (14) interne F2 orientée vers l'habitacle
**caractérisé en ce que** la première feuille de verre (1) présente une teneur pondérale en oxyde de fer total d'au plus 0,05% et la deuxième feuille de verre présente de préférence une teneur pondérale en oxyde de fer total d'au moins 0,4%,
et **en ce qu'**il comporte :
- un premier trou traversant (4), dans l'épaisseur de la deuxième feuille de verre, le premier trou traversant étant centimétrique
- un deuxième trou traversant (4'), dans l'épaisseur de la deuxième feuille de verre, le deuxième trou traversant étant centimétrique, le deuxième trou traversant étant disjoint du premier trou traversant, sous le premier trou traversant, séparé d'une distance intertrous d'au moins 8cm.

2. Vitrage de véhicule (100 à 700) selon la revendication précédente **caractérisé en ce que** la deuxième feuille présentant une tranche longitudinale supérieure, le premier trou traversant est débouchant sur ladite tranche longitudinale supérieure ou est fermé, le premier trou traversant est entre le deuxième trou traversant et la tranche longitudinale supérieure.

3. Vitrage de véhicule (100 à 700) selon l'une des revendications précédentes **caractérisé en ce que** le premier trou traversant (4) est de plus grande taille que le deuxième trou traversant (4').

4. Vitrage de véhicule (100 à 700) selon l'une des revendications précédentes **caractérisé en ce que** le premier trou traversant (4) présente une section transversale de surface S1, notamment trapézoïdale ou rectangulaire ou en disque ou ovale, de préférence de plus petite dimension d'au moins 3cm, de plus grande dimension d'au plus 20cm et de préférence le deuxième trou traversant (4') présente une section de surface S2, notamment trapézoïdale ou rectangulaire ou en disque ou ovale, de préférence de plus petite dimension d'au moins 2cm, de plus grande dimension d'au plus 15cm.

5. Vitrage de véhicule selon l'une des revendications précédentes **caractérisé en ce qu'**il comporte au moins un fil métallique notamment chauffant lié à l'intercalaire de feuilletage, notamment côté face Fb notamment ancré sur la face Fb et éventuellement absent en face dudit premier trou traversant et même dudit deuxième trou traversant.

6. Vitrage de véhicule (400 à 600) selon l'une des revendications précédentes **caractérisé en ce qu'**il comporte :
- une première zone de chauffage locale en face dudit premier trou traversant, notamment par un arrangement de pistes ou fil(s) (68) d'un matériau absorbant ou par une couche chauffante (64) en matériau transparent à au moins une longueur d'onde dite de travail dans l'infrarouge dans une gamme allant de 800nm à 1800nm, en particulier entre 850nm et 1600nm,
- une deuxième zone de chauffage locale en face dudit deuxième trou traversant, notamment par un arrangement de pistes ou fil(s) (68') d'un matériau absorbant ou par une couche chauffante (64) en matériau transparent à au moins une longueur d'onde dite de travail dans l'infrarouge dans une gamme allant de 800nm à 1800nm, en particulier entre 850nm et 1600nm
de préférence avec au moins deux amenées de courant en particulier bus bars locaux ou connecteur(s) plat(s) de préférence tout ou partie décalés des premier et deuxième trous traversant.

7. Vitrage de véhicule (400 à 600) selon la revendication 6 **caractérisé en ce qu'**il comporte au moins deux amenées de courant qui sont des bus bars locaux de préférence tout ou partie décalés des premier et deuxième trous traversant en particulier:
- des premiers et deuxièmes bus bars communs aux première et deuxième zones de chauffage locales
- ou des premier et deuxième bus bars, et un troisième bus bar commun entre le premier et deuxième trou traversant pour les deux zones de chauffage locales
- ou des premiers et deuxième bus bars (65, 66) pour la première zone de chauffage locale, des troisième et quatrième bus bars (65', 66') pour la deuxième zone de chauffage locale.

8. Vitrage de véhicule selon l'une des revendications 6 ou 7 **caractérisé en ce que** les bus bars (65 à 66') ou un ou des connecteurs plats des première et deuxième zones de chauffage locales sont regroupés dans une zone périphérique au premier trou traversant notamment zone supérieure qui est située entre le bord longitudinal supérieur (10) et le premier trou traversant (4) et/ou zone latérale adjacente à un bord latéral du premier trou traversant.

9. Vitrage de véhicule selon l'une des revendications 6 à 8 **caractérisé en ce qu'**il comporte la couche chauffante (64) englobe une surface en regard des premier et deuxième trous traversants (4, 4') pour former les première et deuxième zones de chauffage locales notamment séparées par une discontinuité (640) de la couche chauffante en matériau transparent, par exemple de largeur subcentimétrique et de préférence les bus bars (65 à 66'), notamment premier et deuxième bus bars communs ou encore premier et deuxième bus bars d'une part et troisième et quatrième bus bars d'autre part, sont distants d'au plus 30cm ou même 20cm.

10. Vitrage de véhicule selon l'une des revendications 6 à 9 **caractérisé en ce qu'**il comporte la couche chauffante (64) et les bus bars (65 à 66'), notamment premier et deuxième bus bars communs ou encore premier et deuxième bus bars d'une part et troisième et quatrième bus bar d'autre part, sont distants d'au plus 30cm, ou même 20cm et même sont latéraux notamment verticaux ou obliques.

11. Vitrage de véhicule (400, 500) selon l'une des revendications précédentes **caractérisé en ce qu'**il comporte un élément fonctionnel lié à l'intercalaire de feuilletage, notamment sur l'une des faces Fa ou Fb de l'intercalaire de feuilletage ou au sein dudit intercalaire de feuilletage, entre un premier feuillet et deuxième feuillet intercalaire, **en ce que** l'élément fonctionnel comportant une feuille (60) d'épaisseur submilimétrique, notamment polymère par exemple électroconducteur, et de préférence sur une première face principale orientée côté face F2 ou F3 au moins un revêtement notamment électroconducteur (64, 64') notamment chauffant ou un élément opaque (63, 63'), élément fonctionnel :
- avec une première zone en regard du premier trou traversant (4), de préférence avec le revêtement électroconducteur
- avec une deuxième zone en regard du deuxième trou traversant (4'), de préférence avec le revêtement électroconducteur
et ledit élément fonctionnel; notamment un élément chauffant, étant transparent à une longueur d'onde de travail dans l'infrarouge dans une gamme allant de 800nm à 1800nm, en particulier entre 850nm et 1600nm au moins dans les première et deuxième zones
et ledit élément fonctionnel étant présent entre les premier et deuxième trous traversant, occupant ainsi une surface englobant les premier et deuxième trous traversants, le revêtement électroconducteur optionnel est éventuellement absent entre les premier et deuxième trous traversants.

12. Vitrage de véhicule selon la revendication précédente **caractérisé en ce que** l'élément fonctionnel (60) comporte sur la première face principale orientée, côté face F2 ou F3 :
- le revêtement électroconducteur chauffant (64) en regard du premier trou traversant et en regard du deuxième trou traversant, formant première et deuxième zones de chauffage locales
- et/ou l'élément fonctionnel comporte sur la première face principale ou la deuxième face principale un élément opaque de masquage (63) décalé au moins en partie du premier trou traversant, notamment absent ou dépassant d'au plus 50mm dans le premier trou traversant et décalé au moins en partie en regard du deuxième trou traversant notamment absent ou dépassant d'au plus 50mm dans le deuxième trou traversant.

13. Vitrage de véhicule (200, 700) selon l'une des revendications précédentes **caractérisé en ce que** la première feuille de verre comporte sur la face F2, un revêtement fonctionnel (101, 102, 104, 105) ou un film fonctionnel collé sur la face F2 d'épaisseur submilimétrique notamment un revêtement fonctionnel, élément fonctionnel :
- avec une première zone en regard du premier trou traversant (4)
- avec une deuxième zone en regard du deuxième trou traversant (4'),
éventuellement revêtement fonctionnel s'étendant sous l'intercalaire de feuilletage entre les première et deuxième surface fonctionnelle, s'étendant sur la face F2, sous une éventuelle une couche fonctionnelle, ou est sur une éventuelle une couche fonctionnelle qui est sur la face F2, en particulier couche de masquage
élément fonctionnel transparent à au moins une longueur d'onde dite de travail dans l'infrarouge dans une gamme allant de 800nm à 1800nm, en particulier entre 850nm et 1600nm au moins dans les première et deuxième zones.

14. Vitrage de véhicule (200) selon l'une des revendications précédentes **caractérisé en ce qu'**il comporte un revêtement antireflet (101, 102), notamment à base de silice poreuse, à au moins une longueur d'onde dite de travail dans l'infrarouge dans une gamme allant de 800nm à 1800nm, en particulier entre 850nm et 1600nm, revêtement antireflet :
- avec une première surface antireflet libre dans la zone du premier trou traversant
- avec une deuxième surface antireflet libre dans la zone du deuxième trou traversant.

15. Vitrage de véhicule (200) selon la revendication précédente **caractérisé en ce que** le revêtement antireflet est sur la face F2, l'intercalaire de feuilletage présente un premier trou traversant d'intercalaire en regard du premier trou traversant, et un deuxième trou traversant d'intercalaire en regard du deuxième trou traversant éventuellement le revêtement antireflet s'étend sous l'intercalaire de feuilletage sur la face F2, sous une éventuelle une couche fonctionnelle (5), ou est sur une éventuelle une couche fonctionnelle qui est sur la face F2, en particulier couche de masquage.

16. Vitrage de véhicule (700) selon l'une des revendications précédentes **caractérisé en ce qu'**en regard du premier trou traversant (4), l'intercalaire de feuilletage (3) présente un premier trou traversant d'intercalaire et dans le premier trou traversant est présente une première pièce (9) transparente à au moins une longueur d'onde de travail dans l'infrarouge dans une gamme allant de 800nm à 1800nm, en particulier entre 850nm et 1600nm, qui est collée sur la face F2 nue ou revêtue d'une première couche fonctionnelle et **en ce que** de préférence en regard du deuxième trou traversant (4'), l'intercalaire de feuilletage présente un deuxième trou traversant d'intercalaire et dans le deuxième trou traversant est présente une deuxième pièce (9') transparente à au moins la longueur d'onde de travail dans l'infrarouge dans une gamme allant de 800nm à 1800nm, en particulier entre 850nm et 1600nm qui est collée sur la face F2 nue ou revêtue d'une deuxième couche fonctionnelle notamment distincte ou prolongement de la première couche fonctionnelle.

17. Vitrage de véhicule (700) selon la revendication précédente **caractérisé en ce que** la première pièce (9) comporte une face principale externe avec un revêtement antireflet (106) à ladite longueur d'onde dite de travail dans l'infrarouge dans une gamme allant de 800nm à 1800nm, en particulier entre 850nm et 1600nm, notamment à base de silice (nano)poreuse et de préférence la deuxième pièce (9') comporte une face principale externe avec un revêtement antireflet (106') à au moins une longueur d'onde dite de travail dans l'infrarouge dans une gamme allant de 800nm à 1800nm, en particulier entre 850nm et 1600nm, notamment à base de silice (nano)poreuse.

18. Vitrage de véhicule selon l'une des revendications précédentes **caractérisé en ce qu'**il comporte sur la face F2 une couche fonctionnelle (5, 70) s'étendant sur toute ou partie du vitrage, notamment électroconductrice, athermique, éventuellement chauffante, en particulier un empilement à l'argent, ou encore de masquage, notamment un émail, qui est absorbante à une longueur d'onde de travail dans l'infrarouge dans une gamme allant de 800nm à 1800nm, en particulier entre 850nm et 1600nm et :
- absente dudit premier trou traversant au moins dans la zone centrale dudit premier trou traversant et présente en bordure du premier trou traversant entre la face F2 et Fa, absente dudit deuxième trou traversant au moins dans la zone centrale dudit deuxième trou traversant et présente en bordure du deuxième trou traversant entre la face F2 et Fa,
- et/ou un revêtement fonctionnel est sur la face F2, transparent à la longueur d'onde de travail, est en regard du premier trou traversant et du deuxième trou traversant et même entre premier et deuxième trous traversant, notamment antireflet, étant éventuellement en contact de ladite couche fonctionnelle, notamment sur ou sous la couche fonctionnelle.

19. Dispositif **caractérisé en ce qu'**il comprend :
- ledit vitrage de véhicule, notamment routier, (100 à 700) selon l'une des revendications précédentes
- un système de vision infrarouge à une longueur d'onde de travail dans l'infrarouge dans une gamme allant de 800nm à 1800nm, en particulier entre 850nm et 1600nm disposé dans l'habitacle derrière ledit vitrage et comportant un émetteur (7'), de façon à envoyer un rayonnement traversant la première feuille de verre au niveau du deuxième trou traversant (4') et un récepteur (7) de façon à recevoir un rayonnement après traversée de la première feuille de verre au niveau du premier trou traversant (4).

## Patentansprüche

1. Kraftfahrzeugverglasung (100 bis 700), insbesondere für ein Straßen- oder Eisenbahnfahrzeug, im Besonderen eine Windschutzscheibe, eine Heckscheibe, im Besonderen gewölbt, mit gegebener Dicke, die aufweist:
- eine erste Glasscheibe (1), die dazu bestimmt ist, die Außenverglasung zu sein, mit einer ersten äußeren Hauptfläche F1 (11) und einer zweiten inneren Hauptfläche F2 (12), die dem Fahrgastraum zugewandt ist
- eine Verbundzwischenlage (3) aus Polymermaterial mit einer Hauptfläche Fa, die F2 (31) zugewandt ist, und mit einer Hauptfläche Fb, die Fa (32) gegenüberliegt
- eine zweite Glasscheibe (2), die dazu bestimmt ist, die Innenverglasung zu sein, mit einer dritten Hauptfläche F3 (13) auf der Seite von F2 und einer vierten Hauptfläche F4 (14) im Inneren von F2, die dem Fahrgastraum zugewandt ist,
**dadurch gekennzeichnet, dass** die erste Glasscheibe (1) einen Gewichtsanteil an Gesamteisenoxid von höchstens 0,05 % vorweist und die zweite Glasscheibe vorzugsweise einen Gewichtsanteil an Gesamteisenoxid von mindestens 0,4 % vorweist,
und **dass** sie aufweist:
- ein erstes Durchgangsloch (4) in der Dicke der zweiten Glasscheibe, wobei das erste Durchgangsloch im Zentimeterbereich liegt
- ein zweites Durchgangsloch (4') in der Dicke der zweiten Glasscheibe, wobei das zweite Durchgangsloch im Zentimeterbereich liegt, wobei das zweite Durchgangsloch von dem ersten Durchgangsloch getrennt ist, unter dem ersten Durchgangsloch, separiert durch einen Abstand zwischen den Löchern von mindestens 8 cm.

2. Kraftfahrzeugverglasung (100 bis 700) nach dem vorstehenden Anspruch, **dadurch gekennzeichnet, dass** die zweite Scheibe einen oberen Längsabschnitt vorweist, das erste Durchgangsloch auf den oberen Längsabschnitt mündet oder geschlossen ist, wobei das erste Durchgangsloch zwischen dem zweiten Durchgangsloch und dem oberen Längsabschnitt liegt.

3. Kraftfahrzeugverglasung (100 bis 700) nach einem der vorstehenden Ansprüche, **dadurch gekennzeichnet, dass** das erste Durchgangsloch (4) größer als das zweite Durchgangsloch (4') ist.

4. Kraftfahrzeugverglasung (100 bis 700) nach einem der vorstehenden Ansprüche, **dadurch gekennzeichnet, dass** das erste Durchgangsloch (4) einen Oberflächenquerschnitt S1 vorweist, insbesondere trapezförmig oder rechteckig oder scheibenförmig oder oval, vorzugsweise mit kleinerer Abmessung von mindestens 3 cm, mit größerer Abmessung von höchstens 20 cm, und vorzugsweise das zweite Durchgangsloch (4') einen Oberflächenabschnitt S2 vorweist, insbesondere trapezförmig oder rechteckig oder scheibenförmig oder oval, vorzugsweise mit kleinerer Abmessung von mindestens 2 cm, mit größerer Abmessung von höchstens 15 cm.

5. Kraftfahrzeugverglasung nach einem der vorstehenden Ansprüche, **dadurch gekennzeichnet, dass** sie mindestens einen Metalldraht umfasst, insbesondere heizend, der mit der Verbundzwischenschicht verbunden ist, insbesondere auf der Seite von Fläche Fb, insbesondere auf der Fläche Fb verankert und gegebenenfalls fehlend gegenüber dem ersten Durchgangsloch und sogar dem zweiten Durchgangsloch.

6. Kraftfahrzeugverglasung (400 bis 600) nach einem der vorstehenden Ansprüche, **dadurch gekennzeichnet, dass** sie aufweist:
- eine erste lokale Heizzone gegenüber dem ersten Durchgangsloch, insbesondere durch eine Anordnung von Bahnen oder Draht/Drähten (68) aus einem absorbierenden Material oder durch eine Heizschicht (64) aus transparentem Material mit mindestens einer sogenannten Arbeitswellenlänge in dem Infrarotbereich in einer Bandbreite von 800 nm bis 1800 nm, im Besonderen zwischen 850 nm und 1600 nm,
- eine zweite lokale Heizzone gegenüber dem zweite Durchgangsloch, insbesondere durch eine Anordnung von Bahnen oder Draht/Drähten (68) aus einem absorbierenden Material oder durch eine Heizschicht (64) aus transparentem Material mit mindestens einer sogenannten Arbeitswellenlänge in dem Infrarotbereich in einer Bandbreite von 800 nm bis 1800 nm, im Besonderen zwischen 850 nm und 1600 nm,
vorzugsweise mit mindestens zwei Stromzuführungen, im Besonderen lokale Sammelschienen oder (einen) Flachstecker, vorzugsweise ganz oder teilweise von dem ersten und dem zweiten Durchgangsloch versetzt.

7. Kraftfahrzeugverglasung (400 bis 600) nach Anspruch 6,
**dadurch gekennzeichnet, dass** sie mindestens zwei Stromzuführungen aufweist, die lokale Sammelschienen sind, vorzugsweise ganz oder teilweise von dem ersten und dem zweiten Durchgangsloch versetzt, im Besonderen:
- erste und zweite Sammelschienen, die der ersten und der zweiten lokalen Heizzone gemeinsam sind
- oder die erste und die zweite Sammelschiene und eine dritte gemeinsame Sammelschiene zwischen dem ersten und dem zweiten Durchgangsloch für die zwei lokalen Heizzonen
- oder erste und zweite Sammelschienen (65, 66) für die erste lokale Heizzone, die dritte und die vierte Sammelschiene (65', 66') für die zweite lokale Heizzone.

8. Kraftfahrzeugverglasung nach einem der Ansprüche 6 oder 7,
**dadurch gekennzeichnet, dass** die Sammelschienen (65 bis 66') oder ein oder mehrere Flachverbinder der ersten und der zweiten lokalen Heizzone in einer Zone peripher zu dem ersten Durchgangsloch zusammengefasst sind,
insbesondere einer oberen Zone, die sich zwischen der oberen Längskante (10) und dem ersten Durchgangsloch (4) befindet, und/oder einer seitlichen Zone angrenzend an eine seitliche Kante des ersten Durchgangslochs.

9. Kraftfahrzeugverglasung nach einem der Ansprüche 6 bis 8,
**dadurch gekennzeichnet, dass** sie die Heizschicht (64) aufweist, die eine Oberfläche gegenüber dem ersten und dem zweiten Durchgangsloch (4, 4') zum Ausbilden der ersten und der zweiten lokalen Heizzone einschließt, die insbesondere durch eine Unterbrechung (640) der Heizschicht aus transparentem Material separiert sind, beispielsweise von Subzentimeterbreite, und vorzugsweise die Sammelschienen (65 bis 66'), insbesondere die erste und die zweite gemeinsame Sammelschiene oder auch die erste und die zweite Sammelschienen einerseits und die dritte und die vierte Sammelschiene andererseits höchstens 30 cm oder sogar 20 cm voneinander entfernt sind.

10. Kraftfahrzeugverglasung nach einem der Ansprüche 6 bis 9,
**dadurch gekennzeichnet, dass** sie die Heizschicht (64) aufweist und die Sammelschiene (65 bis 66'), insbesondere die erste und die zweite gemeinsame Sammelschiene oder auch die erste und die zweite Sammelschiene einerseits und die dritte und die vierte Sammelschiene andererseits höchstens 30 cm oder sogar 20 cm voneinander entfernt sind und sogar seitlich sind, insbesondere vertikal oder schräg.

11. Kraftfahrzeugverglasung (400, 500) nach einem der vorstehenden Ansprüche, **dadurch gekennzeichnet, dass** sie ein Funktionselement aufweist, das mit der Verbundzwischenlage verbunden ist, insbesondere auf einer der Flächen Fa oder Fb der Verbundzwischenlage oder innerhalb der Verbundzwischenlage, zwischen einer ersten Lamelle und einer zweiten Zwischenschichtlamelle, **dass** das Funktionselement eine Scheibe (60) mit Submilimeterdicke, insbesondere Polymer, beispielsweise elektrisch leitend, und vorzugsweise auf einer ersten Hauptfläche, die der Seite von Fläche F2 oder F3 zugewandt ist, mindestens eine insbesondere elektrisch leitende Beschichtung (64, 64') aufweist, die insbesondere heizend oder ein lichtundurchlässiges Element (63, 63') ist, das Funktionselement:
- mit einer ersten Zone gegenüber dem ersten Durchgangsloch (4), vorzugsweise mit der elektrisch leitenden Beschichtung
- mit einer zweiten Zone gegenüber dem zweiten Durchgangsloch (4'), vorzugsweise mit der elektrisch leitenden Beschichtung
und das Funktionselement; insbesondere ein Heizelement, bei einer Arbeitswellenlänge in dem Infrarotbereich in einer Bandbreite von 800 nm bis 1800 nm, im Besonderen zwischen 850 nm und 1600 nm, mindestens in der ersten und der zweiten Zone transparent ist
und das Funktionselement zwischen dem ersten und dem zweiten Durchgangsloch vorhanden ist, somit eine Oberfläche einnimmt, die das erste und das zweite Durchgangsloch einschließt, wobei die optionale elektrisch leitende Beschichtung gegebenenfalls zwischen dem ersten und dem zweiten Durchgangsloch fehlend ist.

12. Kraftfahrzeugverglasung nach dem vorstehenden Anspruch,
**dadurch gekennzeichnet, dass** das Funktionselement (60) auf der ersten Hauptfläche, die der Seite von Fläche F2 oder F3 zugewandt ist, aufweist:
- die elektrisch leitende Heizbeschichtung (64) gegenüber dem ersten Durchgangsloch und gegenüber dem zweiten Durchgangsloch, wobei die erste und die zweite lokale Heizzone ausgebildet wird
- und/oder das Funktionselement auf der ersten Hauptfläche oder der zweiten Hauptfläche ein lichtundurchlässiges Maskierungselement (63) aufweist, mindestens teilweise von dem ersten Durchgangsloch versetzt, insbesondere fehlend oder höchstens 50 mm in das erste Durchgangsloch hervorstehend, und mindestens teilweise gegenüber dem zweiten Durchgangsloch versetzt, insbesondere fehlend oder höchstens 50 mm in das zweite Durchgangsloch hervorstehend.

13. Kraftfahrzeugverglasung (200, 700) nach einem der vorstehenden Ansprüche, **dadurch gekennzeichnet, dass** die erste Glasscheibe auf der Fläche F2 eine Funktionsbeschichtung (101, 102, 104, 105) oder einen Funktionsfilm aufweist, der auf die Fläche F2 aufgeklebt ist, mit Submillimeterdicke, insbesondere eine Funktionsbeschichtung, das Funktionselement:
- mit einer ersten Zone gegenüber dem ersten Durchgangsloch (4)
- mit einer zweiten Zone gegenüber dem zweiten Durchgangsloch (4'),
wobei sich gegebenenfalls die Funktionsbeschichtung unter der Verbundzwischenlage zwischen der ersten und der zweiten Funktionsfläche erstreckt, sich auf der Seite F2 erstreckt, unter einer etwaigen Funktionsschicht, oder auf einer etwaigen Funktionsschicht ist, die auf der Fläche F2 ist, im Besonderen der Maskierungsschicht, wobei das Funktionselement bei mindestens einer sogenannten Arbeitswellenlänge in dem Infrarotbereich in einer Bandbreite von 800 nm bis 1800 nm, im Besonderen zwischen 850 nm und 1600 nm, mindestens in der ersten und der zweiten Zone transparent ist.

14. Kraftfahrzeugverglasung (200) nach einem der vorstehenden Ansprüche, **dadurch gekennzeichnet, dass** sie eine Antireflexbeschichtung (101, 102) aufweist, insbesondere auf Basis von porösem Siliziumoxid, bei mindestens einer sogenannten Arbeitswellenlänge in dem Infrarotbereich von 800 nm bis 1800 nm, im Besonderen zwischen 850 nm und 1600 nm, die Antireflexbeschichtung:
- mit einer ersten freien Antireflexoberfläche in der Zone des ersten Durchgangslochs
- mit einer zweiten freien Antireflexoberfläche in der Zone des zweiten Durchgangslochs.

15. Kraftfahrzeugverglasung (200) nach dem vorstehenden Anspruch, **dadurch gekennzeichnet, dass** die Antireflexbeschichtung auf der Fläche F2 ist, die Verbundzwischenlage ein erstes Zwischenlagendurchgangsloch gegenüber dem ersten Durchgangsloch und ein zweites Zwischenlagendurchgangsloch gegenüber dem zweiten Loch vorweist, sich gegebenenfalls die Antireflexbeschichtung unter der Verbundzwischenlage auf der Fläche F2 erstreckt, unter einer etwaigen Funktionsschicht (5), oder auf einer etwaigen Funktionsschicht ist, die auf der Fläche F2 ist, im Besonderen der Maskierungsschicht.

16. Kraftfahrzeugverglasung (700) nach einem der vorstehenden Ansprüche, **dadurch gekennzeichnet, dass** gegenüber dem ersten Durchgangsloch (4) die Verbundzwischenlage (3) ein erstes Zwischenlagendurchgangsloch vorweist und in dem ersten Durchgangsloch ein erstes Stück (9) vorhanden ist, das für mindestens eine Arbeitswellenlänge im Infrarotbereich in einer Bandbreite von 800 nm bis 1800 nm, im Besonderen zwischen 850 nm und 1600 nm, transparent ist, das auf der Fläche F2 blank oder mit einer ersten Funktionsschicht beschichtet aufgeklebt ist, und **dass** vorzugsweise gegenüber dem zweiten Durchgangsloch (4') die Verbundzwischenlage ein zweites Zwischenlagendurchgangsloch vorweist und in dem zweiten Durchgangsloch ein zweites Stück (9') vorhanden ist, das mindestens für die Arbeitswellenlänge in dem Infrarotbereich in einer Bandbreite von 800 nm bis 1800 nm, im Besonderen zwischen 850 nm und 1600 nm, transparent ist, das auf die Fläche F2 blank oder mit einer zweiten Funktionsschicht beschichtet aufgeklebt ist, insbesondere entfernt oder in Verlängerung der ersten Funktionsschicht.

17. Kraftfahrzeugverglasung (700) nach dem vorstehenden Anspruch, **dadurch gekennzeichnet, dass** das erste Stück (9) eine äußere Hauptfläche mit einer Antireflexionsbeschichtung (106) bei der sogenannten Arbeitswellenlänge in dem Infrarotbereich in einer Bandbreite von 800 nm bis 1800 nm, im Besonderen zwischen 850 nm und 1600 nm, insbesondere auf Basis von (nano)porösem Siliciumdioxid aufweist und vorzugsweise das zweite Stück (9') eine äußere Hauptfläche mit einer Antireflexionsbeschichtung (106') bei mindestens einer sogenannten Arbeitswellenlänge in dem Infrarotbereich in der Bandbreite von 800 nm bis 1800 nm, im Besonderen zwischen 850 nm und 1600 nm, insbesondere auf Basis von (nano)porösem Siliziumdioxid aufweist.

18. Kraftfahrzeugverglasung nach einem der vorstehenden Ansprüche, **dadurch gekennzeichnet, dass** sie auf der Fläche F2 eine Funktionsschicht (5, 70) aufweist, die sich über die gesamte oder einen Teil der Verglasung erstreckt, insbesondere elektrisch leitend, athermisch, gegebenenfalls heizend, im Besonderen eine Stapelung mit Silber, oder auch zum Maskieren, insbesondere eine Emaille, die bei einer Arbeitswellenlänge in dem Infrarotbereich in einer Bandbreite von 800 nm bis 1800 nm, im Besonderen zwischen 850 nm und 1600 nm, absorbierend ist, und:
- fehlend von dem ersten Durchgangsloch mindestens in der Mittelzone des ersten Durchgangslochs und an einem Rand des ersten Durchgangslochs zwischen der Fläche F2 und Fa vorhanden, fehlend von dem zweiten Durchgangsloch mindestens in der Mittelzone des zweiten Durchgangslochs und an dem Rand des zweiten Durchgangslochs zwischen der Fläche F2 und Fa vorhanden,
- und/oder eine funktionelle Beschichtung auf der Fläche F2 ist, die bei der Arbeitswellenlänge transparent ist, gegenüber dem ersten Durchgangsloch und dem zweiten Durchgangsloch ist und sogar zwischen dem ersten und dem zweiten Durchgangsloch, insbesondere reflexfrei, gegebenenfalls in Kontakt mit der Funktionsschicht, insbesondere auf oder unter der Funktionsschicht.

19. Vorrichtung, **dadurch gekennzeichnet, dass** sie umfasst:
- die Kraftfahrzeugverglasung, insbesondere Straßenverglasung, (100 bis 700) nach einem der vorstehenden Ansprüche
- ein Infrarotsichtsystem mit einer Arbeitswellenlänge in dem Infrarotbereich in der Bandbreite von 800 nm bis 1800 nm, insbesondere zwischen 850 nm und 1600 nm, das in dem Fahrgastraum hinter der Verglasung angeordnet ist und einen Emitter (7'), um eine Strahlung zu emittieren, die die erste Glasscheibe an dem zweiten Durchgangsloch (4') passiert, und einen Empfänger (7) aufweist, um eine Strahlung zu empfangen, nachdem sie die erste Glasscheibe an dem ersten Durchgangsloch (4) passiert hat.

## Claims

1. A vehicle glazing (100 to 700), particularly for a road or railway vehicle, in particular windscreen, rear window, in particular curved, with a given thickness, comprising:
- a first glass sheet (1) intended to be the exterior glazing, with a first external main face F1 (11) and a second internal main face F2 (12) oriented toward the passenger compartment
- a lamination interlayer (3) made of polymer material with a main face Fa oriented toward F2 (31) and a main face Fb opposite Fa (32)
- a second glass sheet (2) intended to be the interior glazing with a third main face F3 (13) on the side of F2 and a fourth internal F2 main face F4 (14) oriented toward the passenger compartment
**characterized in that** the first glass sheet (1) has a total iron oxide content by weight of at most 0.05% and the second glass sheet preferably has a total iron oxide content by weight of at least 0.4%,
and **in that** it comprises:
- a first through-hole (4), in the thickness of the second glass sheet, the first through-hole being centimetric
- a second through-hole (4'), in the thickness of the second glass sheet, the second through-hole being centimetric, the second through-hole being separated from the first through-hole, under the first through-hole, separated by an interhole distance of at least 8 cm.

2. The vehicle glazing (100 to 700) according to the preceding claim, **characterized in that** when the second sheet has an upper longitudinal edge face, the first through-hole opens onto said upper longitudinal edge face or is closed, the first through-hole is between the second through-hole and the upper longitudinal edge face.

3. The vehicle glazing (100 to 700) according to one of the preceding claims, **characterized in that** the first through-hole (4) is larger than the second through-hole (4').

4. The vehicle glazing (100 to 700) according to one of the preceding claims, **characterized in that** the first through-hole (4) has a surface cross section S1, particularly trapezoidal or rectangular or disc-shaped or oval-shaped, preferably with a smallest dimension of at least 3 cm, with a largest dimension of at most 20 cm and preferably the second through-hole (4') has a surface section S2, particularly trapezoidal or rectangular or disc-shaped or oval-shaped, preferably with a smallest dimension of at least 2 cm, with a largest dimension of at most 15 cm.

5. The vehicle glazing according to one of the preceding claims, **characterized in that** it comprises at least one metal wire particularly heating bonded to the lamination interlayer, particularly on the side of face Fb particularly anchored to face Fb and optionally absent in front of said first through-hole and even of said second through-hole.

6. The vehicle glazing (400 to 600) according to one of the preceding claims, **characterized in that** it comprises:
- a first local heating zone in front of said first through-hole, particularly by an arrangement of tracks or wire(s) (68) made of an absorbent material or by a heating layer (64) made of material that is transparent at least at one so-called infrared working wavelength in a range from 800 nm to 1800 nm, in particular between 850 nm and 1600 nm,
- a second local heating zone in front of said second through-hole, particularly by an arrangement of tracks or wire(s) (68') made of an absorbent material or by a heating layer (64) made of material that is transparent at least at one so-called infrared working wavelength in a range from 800 nm to 1800 nm, in particular between 850 nm and 1600 nm
preferably with at least two electrical leads in particular local busbars or flat connector(s) preferably fully or partially offset from the first and second through-holes.

7. The vehicle glazing (400 to 600) according to claim 6, **characterized in that** it comprises at least two electrical leads which are local busbars preferably fully or partially offset from the first and second through-holes in particular:
- first and second busbars common to the first and second local heating zones
- or first and second busbars, and a third common busbar between the first and second through-holes for the two local heating zones
- or first and second busbars (65, 66) for the first local heating zone, third and fourth busbars (65', 66') for the second local heating zone.

8. The vehicle glazing according to one of claims 6 or 7, **characterized in that** the busbars (65 to 66') or one or more flat connectors of the first and second local heating zones are grouped together in a zone peripheral to the first through-hole particularly an upper zone that is located between the upper longitudinal edge (10) and the first through-hole (4) and/or lateral zone adjacent to a lateral edge of the first through-hole.

9. The vehicle glazing according to one of claims 6 to 8, **characterized in that** it comprises the heating layer (64) encompasses a surface facing the first and second through-holes (4, 4') in order to form the first and second local heating zones particularly separated by a discontinuity (640) of the heating layer made of transparent material, for example with sub-centimetric width and preferably the busbars (65 to 66'), particularly first and second common busbars or even first and second busbars on the one hand and third and fourth busbars on the other hand, are separated by at most 30 cm or even 20 cm.

10. The vehicle glazing according to one of claims 6 to 9, **characterized in that** it comprises the heating layer (64) and the busbars (65 to 66'), particularly first and second common busbars or even first and second busbars on the one hand and third and fourth busbars on the other hand, are separated by at most 30 cm, or even 20 cm and even are lateral particularly vertical or oblique.

11. The vehicle glazing (400, 500) according to one of the preceding claims, **characterized in that** it comprises a functional element bonded to the lamination interlayer, particularly on one of faces Fa or Fb of the lamination interlayer or within said lamination interlayer, between a first lamination and second lamination interlayer, **in that** the functional element comprising a sheet (60) of sub-millimetric thickness, particularly polymer for example electroconductive, and preferably on a first main face oriented toward face F2 or F3 at least one coating particularly electroconductive (64, 64') particularly heating or an opaque element (63, 63'), functional element:
- with a first zone facing the first through-hole (4), preferably with the electroconductive coating
- with a second zone facing the second through-hole (4'), preferably with the electroconductive coating
and said functional element; particularly a heating element, being transparent to an infrared working wavelength in a range from 800 nm to 1800 nm, in particular between 850 nm and 1600 nm at least in the first and second zones
and said functional element being present between the first and second through-holes, thus taking up a surface encompassing the first and second through-holes, the optional electroconductive coating is optionally absent between the first and second through-holes.

12. The vehicle glazing according to the preceding claim, **characterized in that** the functional element (60) comprises on the first main face oriented toward face F2 or F3:
- the heating electroconductive coating (64) facing the first through-hole and facing the second through-hole, forming first and second local heating zones
- and/or the functional element comprises on the first main face or the second main face an opaque masking element (63) at least partially offset from the first through-hole, particularly absent or protruding by at most 50 mm into the first through-hole and at least partially offset facing the second through-hole particularly absent or protruding by at most 50 mm into the second through-hole.

13. The vehicle glazing (200, 700) according to one of the preceding claims, **characterized in that** the first glass sheet comprises on face F2, a functional coating (101, 102, 104, 105) or a functional film adhered to face F2 with sub-millimetric thickness particularly a functional coating, functional element:
- with a first zone facing the first through-hole (4)
- with a second zone facing the second through-hole (4'),
optionally functional coating extending under the lamination interlayer between the first and second functional surfaces, extending over face F2, under an optional a functional layer, or is on an optional a functional layer that is on face F2, in particular masking layer
functional element transparent at least at one so-called infrared working wavelength in a range from 800 nm to 1800 nm, in particular between 850 nm and 1600 nm at least in the first and second zones.

14. The vehicle glazing (200) according to one of the preceding claims, **characterized in that** it comprises an anti-reflective coating (101, 102), particularly based on porous silica, at least at one so-called infrared working wavelength in a range from 800 nm to 1800 nm, in particular between 850 nm and 1600 nm, anti-reflective coating:
- with a first free anti-reflective surface in the zone of the first through-hole
- with a second free anti-reflective surface in the zone of the second through-hole.

15. The vehicle glazing (200) according to the preceding claim, **characterized in that** the anti-reflective coating is on face F2, the lamination interlayer has a first interlayer through-hole facing the first through-hole, and a second interlayer through-hole facing the second through-hole optionally the anti-reflective coating extends under the lamination interlayer on face F2, under an optional a functional layer (5), or is on an optional a functional layer that is on face F2, in particular masking layer.

16. The vehicle glazing (700) according to one of the preceding claims, **characterized in that** facing the first through-hole (4), the lamination interlayer (3) has a first interlayer through-hole and a first piece (9) is present in the first through-hole, transparent at least at one infrared working wavelength in a range from 800 nm to 1800 nm, in particular between 850 nm and 1600 nm, which is adhered to the bare or coated face F2 of a first functional layer and **in that** preferably facing the second through-hole (4'), the lamination interlayer has a second interlayer through-hole and a second piece (9') is present in the second through-hole, transparent at least at the infrared working wavelength in a range from 800 nm to 1800 nm, in particular between 850 nm and 1600 nm which is adhered to the bare or coated face F2 of a second functional layer particularly discrete or an extension of the first functional layer.

17. The vehicle glazing (700) according to the preceding claim, **characterized in that** the first piece (9) comprises a main external face with an anti-reflective coating (106) at said so-called infrared working wavelength in a range from 800 nm to 1800 nm, in particular between 850 nm and 1600 nm, particularly based on (nano)porous silica and preferably the second piece (9') comprises a main external face with an anti-reflective coating (106') at least at one so-called infrared working wavelength in a range from 800 nm to 1800 nm, in particular between 850 nm and 1600 nm, particularly based on (nano)porous silica.

18. The vehicle glazing according to one of the preceding claims, **characterized in that** it comprises on face F2 a functional layer (5, 70) extending over all or part of the glazing, particularly electroconductive, athermal, optionally heating, in particular a silver stack, or even masking, particularly an enamel, that is absorbent at an infrared working wavelength in a range from 800 nm to 1800 nm, in particular between 850 nm and 1600 nm and:
- absent from said first through-hole at least in the central zone of said first through-hole and present on the border of the first through-hole between face F2 and Fa, absent from said second through-hole at least in the central zone of said second through-hole and present on the border of the second through-hole between face F2 and Fa,
- and/or a functional coating is on face F2, transparent at the working wavelength, is facing the first through-hole and the second through-hole and even between the first and second through-holes, particularly anti-reflective, being optionally in contact with said functional layer, particularly on or under the functional layer.

19. A device, **characterized in that** it comprises:
- said vehicle glazing, particularly of a road vehicle, (100 to 700) according to one of the preceding claims
- an infrared vision system at an infrared working wavelength in a range from 800 nm to 1800 nm, in particular between 850 nm and 1600 nm disposed in the passenger compartment behind said glazing and comprising an emitter (7'), so as to send radiation passing through the first glass sheet at the second through-hole (4') and a receiver (7) so as to receive radiation after it has passed through the first glass sheet at the first through-hole (4).
